(19)

Europäisches
Patentamt
European
Patent Office
Office européen
des brevets

(11) **EP 4 083 090 A1**

(12) **EUROPEAN PATENT APPLICATION**
published in accordance with Art. 153(4) EPC

(43) Date of publication:
**02.11.2022 Bulletin 2022/44**

(21) Application number: **20906844.4**

(22) Date of filing: **17.12.2020**

(51) International Patent Classification (IPC):
**C08F 255/02** (2006.01)   **C08L 23/14** (2006.01)

(52) Cooperative Patent Classification (CPC):
**C08F 255/02; C08L 23/14**

(86) International application number:
**PCT/JP2020/047106**

(87) International publication number:
**WO 2021/132000 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2019  JP 2019234958**

(71) Applicant: **SUMITOMO CHEMICAL COMPANY,
LIMITED
Tokyo 103-6020 (JP)**

(72) Inventors:
• **SUZUE, Masato
  Ichihara-shi, Chiba 299-0195 (JP)**
• **FUKURODA, Hiroshi
  Ichihara-shi, Chiba 299-0195 (JP)**

(74) Representative: **Global IP Europe
Patentanwaltskanzlei
Pfarrstraße 14
80538 München (DE)**

(54) **HETEROPHASIC PROPYLENE POLYMERIC MATERIAL**

(57)    A heterophasic propylene polymeric material comprising a propylene-based polymer A, a propylene-based polymer B, and a propylene copolymer C, wherein the polymer A contains 80 mass% or more of monomer units derived from propylene and has a limiting viscosity of 2.0 dL/g or less, the polymer B contains 80 mass% or more of monomer units derived from propylene and has a limiting viscosity of 2.1-4.9 dL/g, the copolymer C contains monomer units derived from propylene and 30-55 mass% of monomer units derived from ethylene or the like and has a limiting viscosity of 1.5-4.5 dL/g, and the polymer A, the polymer B, and the copolymer C are respectively contained in ratios of 50-75 mass%, 5-20 mass%, and 5-40 mass%.

EP 4 083 090 A1

**Description**

TECHNICAL FIELD

The present invention relates to a heterophasic propylene polymeric material.

BACKGROUND ART

Patent Document 1 describes a polypropylene resin composition and a molded article produced therefrom, and describes that the polypropylene resin composition includes a propylene block copolymer, including a polymer composition (I) and a polymer composition (II), that is, a so-called heterophasic propylene polymeric material.

PRIOR ART DOCUMENTS

PATENT DOCUMENT

Patent Document 1: WO 2009/038237

SUMMARY OF THE INVENTION

PROBLEMS TO BE SOLVED BY THE INVENTION

A material from which a molded article can be produced with a high dimensional stability is useful for various usages.

Hence, an object of the present invention is to provide a heterophasic propylene polymeric material from which a molded article can be produced with an excellent dimensional stability.

MEANS FOR SOLVING THE PROBLEMS

A heterophasic propylene polymeric material according to the present invention comprises a propylene-based polymer A, a propylene-based polymer B, and a propylene copolymer C, in which the propylene-based polymer A contains a propylene-derived monomer unit by 80 mass% or more and has a limiting viscosity of 2.0 dL/g or less, the propylene-based polymer B contains the propylene-derived monomer unit by 80 mass% or more and has a limiting viscosity of 2.1-4.9 dL/g, the propylene copolymer C contains the propylene-derived monomer unit and a monomer unit derived from at least one kind of $\alpha$-olefin selected from the group consisting of ethylene and $\alpha$-olefins having 4 to 12 carbon atom, and has a limiting viscosity of 1.5-4.5 dL/g, the propylene copolymer C containing, by 30-55 mass%, the monomer unit derived from at least one kind of $\alpha$-olefin selected from the group consisting of ethylene and $\alpha$-olefins having 4 to 12 carbon atoms, and contents of the propylene-based polymer A, the propylene-based polymer B, and the propylene copolymer C are 50-75 mass%, 5-20 mass%, and 5-40 mass%, respectively, where a total mass of the heterophasic propylene polymeric material is 100 mass%.

In the heterophasic propylene polymeric material, the limiting viscosity of the propylene-based polymer A may be 0.3-1.2 dL/g, the limiting viscosity of the propylene-based polymer B may be 2.5-4.0 dL/g, the limiting viscosity of the propylene copolymer C may be 2.0-4.0 dL/g, the propylene copolymer C contains, by 35-50 mass%, the monomer unit derived from at least one kind of $\alpha$-olefin selected from the group consisting of ethylene and $\alpha$-olefins having 4 to 12 carbon atoms, and the contents of the propylene-based polymer A, the propylene-based polymer B, and the propylene copolymer C are 60-75 mass%, 7-18 mass%, and 7-33 mass%, respectively, where the total mass of the heterophasic propylene polymeric material is 100 mass%.

EFFECT OF THE INVENTION

According to the present invention, it becomes possible to provide a heterophasic propylene polymeric material from which a molded article can be produced with an excellent dimensional stability.

MODE FOR CARRYING OUT THE INVENTION

[Definition]

In this Specification, what is meant by a term "$\alpha$-olefin" is an aliphatic unsaturated hydrocarbon having a carbon-carbon unsaturated double bond at its α-position.

In this Specification, what is meant by the term "heterophasic propylene polymeric material" is a mixture having a structure in which a propylene copolymer is dispersed in a matrix of a propylene-based polymer including a propylene-derived monomer unit by 80 mass% or more (where a total mass of the propylene-based polymer is 100 mass%), the propylene copolymer including a monomer unit derived from at least one kind of α-olefin selected from the group consisting of ethylene and C4 to C12 α-olefins and the propylene-derived monomer unit.

In the following, some embodiments according to the present invention will be described in detail. It should be noted that the present invention is not limited to the following embodiments. Note that in this Specification the expression "a lower limit-an upper limit" for describing a numerical range means "not less than the lower limit but not more than the upper limit," while the expression "an upper limit-a lower limit" means "not more than the upper limit but not less than the lower limit". That is, these expressions describe numerical ranges in which the upper limits and the lower limits are inclusive.

[Heterophasic Propylene Polymeric Material]

A heterophasic propylene polymeric material according to the present embodiment includes a propylene-based polymer A, a propylene-based polymer B, and a propylene copolymer C, in which the propylene-based polymer A contains a propylene-derived monomer unit by 80 mass% or more and has a limiting viscosity of 2.0 dL/g or less, the propylene-based polymer B contains the propylene-derived monomer unit by 80 mass% or more and has a limiting viscosity of 2.1-4.9 dL/g, the propylene copolymer C contains the propylene-derived monomer unit and, by 30-55 mass%, a monomer unit derived from at least one kind of α-olefin being selected from the group consisting of ethylene and C4 to C12 α-olefins, and has a limiting viscosity of 1.5-4.5 dL/g, and contents of the propylene-based polymer A, the propylene-based polymer B, and the propylene copolymer C are 50-75 mass%, 5-20 mass%, and 5-40 mass%, respectively, where a total mass of the heterophasic propylene polymeric material is 100 mass%. The heterophasic propylene polymeric material with such a configuration is such that a molded article with an excellent dimensional stability can be produced therefrom.

In the present Specification, what is meant by a term "limiting viscosity" ([η], unit: dL/g) is a value measured at a temperature of 135°C with tetralin as a solvent.

Reduced viscosities are measured at three points of concentrations of 0.1 g/dL, 0.2 g/dL, and 0.5 g/d by using an Ubbelohde viscometer. The limiting viscosity is determined by an extrapolation method including plotting the reduced viscosities against the concentration and extrapolating the concentrations to zero. A calculation method for the limiting viscosity by such an extrapolation method is described, for example, in "Kobunshi Yoeki, Kobunshi Jikkengaku 11" (Polymer Solution, Polymer Experiments 11) (published in 1982 by KYORITSU SHUPPAN CO., LTD.), page 491.

The limiting viscosity of a propylene-based polymer A may be 0.3-1.2 dL/g, 0.4-1.0 dL/g, or 0.5-0.8 dL/g.

The propylene-based polymer A may be, for example, a propylene homopolymer, or may include a monomer unit derived from a monomer other than propylene. In case where the propylene-based polymer A includes such a monomer unit derived from a monomer other than propylene, a content of such a monomer unit may be, for example, 0.01 mass% or more but less than 20 mass%, based on a total mass of the propylene-based polymer A.

Examples of the monomer other than propylene include ethylene and C4 to C12 α-olefins. Among them, the monomer other than propylene may be preferably at least one selected from the group consisting of ethylene and C4 to C10 α-olefins, more preferably at least one selected from the group consisting of ethylene, 1-butene, 1-hexene, and 1-octene, or further preferably at least one selected from the group consisting of ethylene and 1-butene.

Examples of the propylene-based polymer including a monomer unit derived from a monomer other than propylene include propylene-ethylene copolymer, propylene-1-butene copolymer, propylene-1-hexene copolymer, propylene-1-octene copolymer, propylene-ethylene-1-butene copolymer, propylene-ethylene-1-hexene copolymer, and propylene-ethylene-1-octene copolymer.

For the sake of rigidity of the molded article, the propylene-based polymer A may be preferably propylene homopolymer, propylene-ethylene copolymer, propylene-1-butene copolymer, or propylene-ethylene-1-butene copolymer, and may be more preferably propylene homopolymer.

The heterophasic propylene polymeric material according to the present embodiment may contain only one kind of the propylene-based polymer A or two or more kinds of propylene-based polymers A.

A limiting viscosity of a propylene-based polymer B may be 2.5-4.0 dL/g, 2.6-3.9 dL/g, or 2.8-3.7 dL/g.

The propylene-based polymer B may be, for example, a propylene homopolymer, or may include a monomer unit derived from a monomer other than propylene. In case where the propylene-based polymer B includes such a monomer unit derived from a monomer other than propylene, a content of such a monomer unit may be, for example, 0.01 mass% or more but less than 20 mass%, based on a total mass of the propylene-based polymer A.

Examples of the monomer other than propylene include ethylene and C4 to C12 α-olefins. Among them, the monomer other than propylene may be preferably at least one selected from the group consisting of ethylene and C4 to C10 α-olefins, more preferably at least one selected from the group consisting of ethylene, 1-butene, 1-hexene, and 1-octene, or further preferably at least one selected from the group consisting of ethylene and 1-butene.

Examples of the propylene-based polymer including a monomer unit derived from a monomer other than propylene include propylene-ethylene copolymer, propylene-1-butene copolymer, propylene-1-hexene copolymer, propylene-1-octene copolymer, propylene-ethylene-1-butene copolymer, propylene-ethylene-1-hexene copolymer, and propylene-ethylene-1-octene copolymer.

For the sake of rigidity of the molded article, the propylene-based polymer B may be preferably propylene homopolymer, propylene-ethylene copolymer, propylene-1-butene copolymer, or propylene-ethylene-1-butene copolymer, and may be more preferably propylene homopolymer.

The heterophasic propylene polymeric material according to the present embodiment may contain only one kind of the propylene-based polymer B or two or more kinds of propylene-based polymers B.

A limiting viscosity of a propylene copolymer C may be 2.0-4.0 dL/g, 2.1-3.5 dL/g, or 2.1-3.0 dL/g.

The propylene copolymer C may contain, by 35-50 mass%, by 36-48 mass%, or 38-45 mass%, the monomer unit derived from at least one kind of α-olefin selected from the group consisting of ethylene and C4 to C12 α-olefins.

In the propylene copolymer C, the at least one kind of α-olefin selected from the group consisting of ethylene and C4 to C12 α-olefins may be preferably at least one selected from the group consisting of ethylene and C4 to C10 α-olefins, more preferably at least one selected from the group consisting of ethylene, 1-butene, 1-hexene, 1-octene and 1-decene, or further preferably at least one selected from the group consisting of ethylene and 1-butene.

Examples of the propylene copolymer C include propylene-ethylene copolymer, propylene-ethylene-1-butene copolymer, propylene-ethylene-1-hexene copolymer, propylene-ethylene-1-octene copolymer, propylene-ethylene-1-decene copolymer, propylene-1-butene copolymer, propylene-1-hexene copolymer, propylene-1-octene copolymer, and propylene-1-decene copolymer. Among them, the propylene copolymer C may be preferably propylene-ethylene copolymer, propylene-1-butene copolymer, or propylene-ethylene-1-butene copolymer, and may be more preferably propylene-ethylene copolymer.

The heterophasic propylene polymeric material according to the present embodiment may contain only one kind of the propylene copolymer C or two or more kinds of propylene copolymers C.

Examples of the heterophasic propylene polymeric material according to the present embodiment include (propylene)-(propylene-ethylene) polymeric material, (propylene)-(propylene-ethylenel-butene) polymeric material, (propylene)-(propylene-ethylenel-hexene) polymeric material, (propylene)-(propylene-ethylene1-octene) polymeric material, (propylene)-(propylene-1-butene) polymeric material, (propylene)-(propylene-1-hexene) polymeric material, (propylene)-(propylene-1-octene) polymeric material, (propylene)-(propylene-1-decene) polymeric material, (propylene-ethylene)-(propylene-ethylene) polymeric material, (propylene-ethylene)-(propylene-ethylenel-butene) polymeric material, (propylene-ethylene)-(propylene-ethylenel-hexene) polymeric material, (propylene-ethylene)-(propylene-ethylenel-octene) polymeric material, (propylene-ethylene)-(propylene-ethylene1-decene) polymeric material, (propylene-ethylene)-(propylene-1-butene) polymeric material, (propylene-ethylene)-(propylene-1-hexene) polymeric material, (propylene-ethylene)-(propylene-1-octene) polymeric material, (propylene-ethylene)-(propylene-1-decene) polymeric material, (propylene-1-butene)-(propylene-ethylene) polymeric material, (propylene-1-butene)-(propylene-ethylenel-butene) polymeric material, (propylene-1-butene)-(propylene-ethylene1-hexene) polymeric material, (propylene-1-butene)-(propylene-ethylene1-octene) polymeric material, (propylene-1-butene)-(propylene-ethylene1-decene) polymeric material, (propylene-1-butene)-(propylene-1-butene) polymeric material, (propylene-1-butene)-(propylene-1-hexene) polymeric material, (propylene-1-butene)-(propylene-1-octene) polymeric material, (propylene-1-butene)-(propylene-1-decene) polymeric material, (propylene-1-hexene)-(propylene-1-hexene) polymeric material, (propylene-1-hexene)-(propylene-1-octene) polymeric material, (propylene-1-hexene)-(propylene-1-decene) polymeric material, (propylene-1-octene)-(propylene-1-octene) polymeric material, and (propylene-1-octene)-(propylene-1-decene) polymeric material. Among them, preferable examples include (propylene)-(propylene-ethylene) polymeric material, (propylene)-(propylene-ethylenel-butene)polymeric material, (propylene-ethylene)-(propylene-ethylene)polymeric material, (propylene-ethylene)-(propylene-ethylenel-butene)polymeric material, and (propylene-1-butene)-(propylene-1-butene)polymeric material, and more preferable examples include (propylene)-(propylene-ethylene)polymeric material.

Here, the expressions above indicate "(the kind of propylene-based polymer containing a propylene-derived monomer unit by 80 mass% or more)-(the kind of the propylene copolymer C)". That is, what is meant by the expression "(propylene)-(propylene-ethylene) polymeric material" is "a heterophasic propylene polymeric material in which the propylene-based polymers A and B are propylene homopolymer and the propylene copolymer C is propylene-ethylene copolymer". The other similar expressions should be understood likewise.

The contents of the propylene-based polymer A, the propylene-based polymer B, and the propylene copolymer C may be 60-75 mass%, 7-18 mass%, and 7-33 mass%, respectively, where the total mass of the heterophasic propylene polymeric material is 100 mass%.

In the heterophasic propylene polymeric material according to the present embodiment, it is preferable for the sake of the dimensional stability that the limiting viscosity of the propylene-based polymer A be 0.3-1.2 dL/g, the limiting viscosity of the propylene-based polymer B be 2.5-4.0 dL/g, the limiting viscosity of the propylene copolymer C be 2.0-4.0 dL/g, the propylene copolymer C includes, by 35-50 mass%, the monomer unit derived from at least one kind of α-olefin being selected from the group consisting of ethylene and C4 to C12 α-olefins, and the contents of the propylene-based polymer A, the propylene-based polymer B, and the propylene copolymer C are 60-75 mass%, 7-18 mass%, and 7-33 mass%, respectively, where the total mass of the heterophasic propylene polymeric material is 100 mass%.

An isotactic pentad fraction of the heterophasic propylene polymeric material (which may be referred to as [mmmm] fraction) may be preferably 0.950 or more, or more preferably 0.970 or more, for the sake of the rigidity and dimensional stability of the molded article made from the resin composition. An isotactic pentad fraction of the component A may be, for example, 1.000 or less. A polymer with an isotactic pentad fraction of approximately 1 can be considered as having a molecular structure with a high stereoregularity and thus with a high crystallinity.

The isotactic pentad fraction indicates an isotactic fraction per pentad unit. That is, the isotactic pentad fraction indicates a content ratio of a structure of five propylene-derived monomer units chained in series via meso bonding in relation to the pentad unit. Note that the isotactic pentad fraction is a value measured for a chain of the propylene-derived monomer unit when the component in question is a copolymer.

In this Specification, the isotactic pentad fraction is a value measured by $^{13}C$-NMR spectra. More specifically, the isotactic pentad fraction is a ratio of an area of a peak belonging to mmmm with respect to absorption peaks of the whole methyl carbon regions obtained by $^{13}C$-NMR spectra. A measurement method of the isotactic pentad fraction by $^{13}C$-NMR spectra is described, for example, in Macromolecules, 6, 925 (1973), written by A. Zambelli at el. Here, the belonging of absorption peaks obtained by $^{13}C$- spectra is identified referring to the description in Macromolecules, 8, 687(1975).

The heterophasic propylene polymeric material may include, if necessary, an additive such as a heat stabilizing agent, an ultraviolet stabilizing agent, an anti-oxidant, a crystal nucleating agent, a lubricant, a coloring agent, an anti-blocking agent, an anti-static agent, an anti-fog agent, a flame retardant, a petroleum resin, a foaming agent, a foaming auxiliary agent, or an organic or inorganic filler. An amount of the additive added therein may be preferably not less than 0.01 wt%, but preferably not more than 30 wt%, with respect to the whole heterophasic propylene polymeric material. The additive may include one kind of additive, or may include two or more kinds of additives in combination at an arbitrary ratio.

[Production Method of Heterophasic Propylene polymeric material]

One example of the method for producing the heterophasic propylene polymeric material will be described herein. The production method includes a step 1, a step 2, and a step 3.

The step 1 comprising at least one selected from the group consisting of:

a step 1-1 of polymerizing a monomer or monomers comprising propylene in a liquid phase under a condition that a hydrogen/propylene ratio is 1000 molppm or higher to obtain at least part of the propylene-based polymer A; and
a step 1-2 of polymerizing a monomer or monomers comprising propylene in a gas phase under a condition that a hydrogen/propylene ratio is 50000 molppm or higher to obtain at least part of the propylene-based polymer A.

The step 2 comprising at least one selected from the group consisting of:

a step 2-1 of polymerizing a monomer or monomers comprising propylene in a liquid phase under a condition that a hydrogen/propylene ratio is 40 molppm or higher but less than 1000 molppm to obtain at least part of the propylene-based polymer B; and
a step 2-2 of polymerizing a monomer or monomers comprising propylene in a gas phase under a condition that a hydrogen/propylene ratio is 40 molppm or higher but less than 50000 molppm to obtain at least part of the propylene-based polymer B.

The step 3 being a step of polymerizing monomers comprising propylene and at least one kind of α-olefin selected from the group consisting of α-olefins having 4 to 12 carbon atoms, under a condition that a hydrogen/propylene ratio is 9000 molppm or higher but 310000 molppm or less to obtain the propylene copolymer C.

In this Specification, the hydrogen/propylene ratio is defined as below.

In case where the polymerization is carried out in a liquid phase, the hydrogen/propylene ratio is a quantitative ratio of hydrogen gas and liquid propylene in a feeding section of the reactor.

In case where the polymerization is carried out in a gas phase, the hydrogen/propylene ratio is a quantitative ratio of hydrogen gas and propylene gas at an outlet of the reactor.

In this Specification, for example, what is meant by a wording "the hydrogen/propylene ratio is 1 molppm" is equivalent to that of a wording "the hydrogen/propylene ratio is $1 \times 10^{-6}$ mol/mol," meaning that the amount of hydrogen

is 1 × 10$^{-6}$ mol with respect to 1 mol of propylene.

[Step 1-1]

In the step 1-1, a monomer or monomers including propylene is/are polymerized, for example, in the presence of a polymerization catalyst and hydrogen by using a liquid-phase polymerization reactor. The monomer or monomers for use in this polymerization is arbitrarily adjustable in terms of its composition based on kinds and contents of the monomer unit(s) constituting the propylene-based polymer A. The content of propylene in the monomer or monomers may be, for example, 80 mass% or more, 90 mass% or more, or 100 mass% or more, with respect to the total mass of the monomer or monomers.

Examples of the liquid-phase polymerization reactor include a loop-type liquid-phase polymerization reactor and a vessel-type liquid-phase polymerization reactor.

Examples of the polymerization catalyst include Ziegler-Natta catalysts, metallocene catalysts, and the like. The Ziegler-Natta catalysts are preferable. Examples of such Ziegler-Natta catalysts include Ti-Mg catalysts such as solid catalyst components obtainable by contacting a magnesium compound with a titanium compound, solid catalyst components obtainable by contacting a magnesium compound with a titanium compound, catalysts containing an organic aluminum compound and, if necessary, a third component such as an electron-donor compound, and the like catalysts, among which the solid catalyst components obtainable by contacting a magnesium compound with a titanium compound, and the catalysts containing an organic aluminum compound and, if necessary, a third component such as an electron-donor compound are preferable, and the solid catalysts component obtainable by contacting a magnesium compound with a titanium halide and catalysts containing an organic aluminum compound and an electron-donor compound are more preferable. The polymerization catalyst may be such a catalyst that is preactivated by being contacted with a small amount of olefin.

The polymerization catalyst may be a preliminary polymerization catalyst component obtainable by performing preliminary polymerization of an olefin in the presence of the solid catalyst component, n-hexane, triethyl aluminum, tert-butyl-n-propyl dimethoxy silane, and the like. The olefin used in the preliminary polymerization may be preferably any one of the olefins constituting the heterophasic propylene polymeric material.

A polymerization temperature may be 0-120°C, for example. A polymerization pressure may be in a range of an atmospheric pressure to 10 MPaG, for example.

The hydrogen/propylene ratio in the step 1-1 may be 1500 molppm or more, but 100000 molppm or less, or may be 3000 molppm or more, but 50000 molppm or less.

[Step 1-2]

In the step 1-2, a monomer or monomers including propylene is/are polymerized, for example, in the presence of a polymerization catalyst and hydrogen by using a gas-phase polymerization reactor. The monomer or monomers for use in this polymerization is arbitrarily adjustable in terms of its composition based on kinds and contents of the monomer unit(s) constituting the propylene-based polymer A. The content of propylene in the monomer or monomers may be, for example, 80 mass% or more, 90 mass% or more, or 100 mass% or more, with respect to the total mass of the monomer or monomers.

Examples of the gas-phase polymerization reactor include a fluidized-bed type reactor and a spouted-bed type reactor.

The gas-phase polymerization reactor may be a multi-stage gas-phase polymerization reactor having a plurality of reaction regions connected in series. The multi-stage gas-phase polymerization reactor may be a multi-stage gas-phase polymerization reactor having a plurality of polymerization vessels connected in series. With a device configured as such, the limiting viscosity of the propylene-based polymer A can be easily adjusted within the ranges mentioned above.

The multi-stage gas-phase polymerization reactor may be, for example, configured to include a cylinder section extended in a perpendicular direction, a tapered section, which is provided in the cylinder section and is tapered downward with a diameter getting smaller downward and with a gas introducing inlet provided at a lower end, a spouted-bed type olefin polymerization reaction region, which is surrounded with an inner surface of the tapered section and an inner surface of that portion of the cylinder section which is upper than the tapered section and is for forming a spouted bed therein, and a fluidized bed olefin polymerization reaction region.

The multi-stage gas-phase polymerization reactor may be preferably configured to have a plurality of reaction regions in the perpendicular direction. For the sake of the limiting viscosity of the propylene-based polymer A, the multi-stage gas-phase polymerization reactor may be preferably configured such that, for example, the multi-stage gas-phase polymerization reactor has a plurality of reaction regions in the perpendicular direction, where an upmost one of the plurality of reaction regions is a fluidized-bed type olefin polymerization reaction region and the rest of the plurality of reaction regions is a plurality of spouted-bed type olefin polymerization reaction regions. Such a device is configured such that, for example, solid components are supplied to the device from above and gas components are supplied to the device from below, so that a fluidized bed or a spouted bed is formed in the reaction regions. The gas components may include inert gas such as nitrogen in addition to hydrogen and the monomer(s) including propylene. In such a device, the number of the spouted-bed type olefin polymerization reaction regions may be preferably 3.

In case where the plurality of reaction regions is provided in the perpendicular direction, downstream reaction regions may be provided at a position diagonally downward with respect to upstream reaction regions. Such a device may be configured such that, for example, solid components obtained in an upstream reaction region are discharged in a diagonally downward direction and the solid components thus discharged are supplied to a downstream reaction region from a diagonally upward direction. In this case, the gas components may be such that, for example, the gas components discharged from an upper portion of a downstream reaction region is supplied to a lower portion of an upstream reaction region.

Concrete examples of the polymerization catalyst include those as mentioned above.

A polymerization temperature may be, for example, 0-120°C, 20-100°C, or 40-100°C. A polymerization pressure may be, for example, in a range of an atmospheric pressure to 10 MPaG, or 1-5 MPaG.

The hydrogen/propylene ratio in the step 1-2 may be 65000 molppm or more, but 1500000 molppm or less, or may be 80000 molppm or more, but 1000000 molppm or less.

[Step 2-1]

In the step 2-1, a monomer or monomers including propylene is/are polymerized, for example, in the presence of a polymerization catalyst and hydrogen by using a liquid-phase polymerization reactor. The monomer or monomers for use in this polymerization is arbitrarily adjustable in terms of its composition based on kinds and contents of the monomer unit(s) constituting the propylene-based polymer B. The content of propylene in the monomer or monomers may be, for example, 80 mass% or more, 90 mass% or more, or 100 mass% or more, with respect to the total mass of the monomer or monomers.

Examples of the liquid-phase polymerization reactor used in the step 2-1 include a loop-type liquid-phase polymerization reactor and a vessel-type liquid-phase polymerization reactor.

Concrete examples of the polymerization catalyst include those as mentioned above.

A polymerization temperature may be 0-120°C, for example. A polymerization pressure may be in a range of an atmospheric pressure to 10 MPaG, for example.

The hydrogen/propylene ratio in the step 2-1 may be 50 molppm or more, but 900 molppm or less, or may be 75 molppm or more, but 750 molppm or less.

[Step 2-2]

In the step 2-2, a monomer or monomers including propylene is/are polymerized, for example, in the presence of a polymerization catalyst and hydrogen by using a gas-phase polymerization reactor. The monomer or monomers for use in this polymerization is arbitrarily adjustable in terms of its composition based on kinds and contents of the monomer unit(s) constituting the propylene-based polymer B. The content of propylene in the monomer or monomers may be, for example, 80 mass% or more, 90 mass% or more, or 100 mass% or more, with respect to the total mass of the monomer or monomers.

Examples of the gas-phase polymerization reactor used in the step 2-2 include a fluidized-bed type reactor and a spouted-bed type reactor.

Concrete examples of the polymerization catalyst include those as mentioned above.

A polymerization temperature may be, for example, 0-120°C, 20-100°C, or 40-100°C. A polymerization pressure may be, for example, in a range of an atmospheric pressure to 10 MPaG, or 1-5 MPaG.

The hydrogen/propylene ratio in the step 2-2 may be 100 molppm or more, but 35000 molppm or less, or may be 300 molppm or more, but 20000 molppm or less.

[Step 3]

The step 3 can be carried out in a liquid phase or in a gas phase, but is carried out in a gas phase herein, for example. In case where the step 3 is carried out in a liquid phase, for example, a liquid-phase reactor such as a loop-type liquid-phase reactor or a vessel-type liquid-phase reactor may be used. In case where the step 3 is carried out in a gas phase, for example, a gas-phase reactor such as a fluidized-bed type reactor or a spouted-bed type reactor may be used.

The step 3 may be configured, for example, to polymerize, in the presence of the polymerization catalyst and hydrogen, monomers including propylene and at least one kind of $\alpha$-olefin selected from the group consisting of C4 to C12 α-olefins. The monomers for use in the polymerization are arbitrarily adjustable in terms of composition based on kinds and contents of the monomer units constituting the propylene copolymer C. The content of the at least one kind of α-olefin selected from the group consisting of C4 to C12 α-olefins in the monomer or monomers for use in the polymerization may be, for example, 30-55 mass%, or 35-50 mass%, with respect to the total mass of the monomers.

Concrete examples of the polymerization catalyst include those as mentioned above.

In case where the polymerization is carried out in a liquid phase, the polymerization temperature may be, for example, 40-100°C, and the polymerization pressure may be for example, in a range of an atmospheric pressure to 5 MPaG. In case where the polymerization is carried out in a gas phase, the polymerization temperature may be, for example, 40-100°C, and the polymerization pressure may be for example, 0.5-5 MPaG.

The hydrogen/propylene ratio in the step 3 may be 12000 molppm or more, but 250000 molppm or less, or may be 15000 molppm or more, but 200000 molppm or less.

The polymer may be produced in such a way that the propylene-based polymer A, the propylene-based polymer B and the propylene copolymer C are prepared separately in the respective steps for their preparations, and mixed together in solution states, melted states, or the like states after the polymerization catalyst inactivation, but the polymer may be produced continuously in such a way that a polymer produced is passed down to the following step in the downstream without the polymerization catalyst inactivation. In case where the polymerization is carried out continuously without the polymerization catalyst inactivation, the polymerization catalyst in the preceding step also functions as the polymerization catalyst in the following step.

The step 1, the step 2, and the step 3 may be carried out in any order. It is preferable that the step 1 include the step 1-1 and the step 1-2. It is preferable that the step 2 include the step 2-2.

A production method according to the present embodiment may include the step 1-1, the step 1-2, the step 2-2, and the step 3 in this order, for example.

For the sake of the dimensional stability of the molded article, a production method according to the present embodiment may be preferably configured such that the hydrogen/propylene ratio in the step 1-1 is 1500 molppm or more but 100000 molppm or less, the hydrogen/propylene ratio in the step 1-2 is 65000 molppm or more but 1500000 molppm or less, the hydrogen/propylene ratio in the step 2-1 is 50 molppm or more but 900 molppm or less, the hydrogen/propylene ratio in the step 2-2 is 100 molppm or more but 35000 molppm or less, the hydrogen/propylene ratio in the step 3 is 12000 molppm or more but 250000 molppm or less, or more preferably such that the hydrogen/propylene ratio in the step 1-1 is 3000 molppm or more but 50000 molppm or less, the hydrogen/propylene ratio in the step 1-2 is 80000 molppm or more but 1000000 molppm or less, the hydrogen/propylene ratio in the step 2-1 is 75 molppm or more but 750 molppm or less, the hydrogen/propylene ratio in the step 2-2 is 300 molppm or more but 20000 molppm or less, and the hydrogen/propylene ratio in the step 3 is 15000 molppm or more but 200000 molppm or less.

That is, a production method for the heterophasic propylene polymeric material according to the present embodiment may include the step 1, the step 2, and the step 3.

The step 1 including at least one selected from the group consisting of:

a step 1-1 of polymerizing a monomer or monomers including propylene in a liquid phase under a condition that a hydrogen/propylene ratio is 1000 molppm or higher to obtain at least part of the propylene-based polymer A; and
a step 1-2 of polymerizing a monomer or monomers including propylene in a gas phase under a condition that a hydrogen/propylene ratio is 50000 molppm or higher to obtain at least part of the propylene-based polymer A.

The step 2 including at least one selected from the group consisting of:

a step 2-1 of polymerizing a monomer or monomers including propylene in a liquid phase under a condition that a hydrogen/propylene ratio is 40 molppm or higher but less than 1000 molppm to obtain at least part of the propylene-based polymer B; and
a step 2-2 of polymerizing a monomer or monomers including propylene in a gas phase under a condition that a hydrogen/propylene ratio is 40 molppm or higher but less than 50000 molppm to obtain at least part of the propylene-based polymer B.

The step 3 being a step of polymerizing monomers including propylene and a monomer unit derived from at least one kind of α-olefin being selected from the group consisting of C4 to C12 α-olefins, in a condition that a hydrogen/propylene ratio is 9000 molppm or higher but 310000 molppm or less to obtain the propylene copolymer C.

In the method for producing the heterophasic propylene polymeric material, the hydrogen/propylene ratio in the step 1-1 may be 1500 molppm or higher but 100000 molppm or less, the hydrogen/propylene ratio in the step 1-2 may be 65000 molppm or higher but 1500000 molppm or less, the hydrogen/propylene ratio in the step 2-1 may be 50 molppm or higher but 900 molppm or less, the hydrogen/propylene ratio in the step 2-2 may be 100 molppm or higher but 35000 molppm or less, and the hydrogen/propylene ratio in the step 3 may be 12000 molppm or higher but 250000 molppm or less.

In the method for producing the heterophasic propylene polymeric material, the hydrogen/propylene ratio in the step 1-1 may be 3000 molppm or higher but 50000 molppm or less, the hydrogen/propylene ratio in the step 1-2 may be 80000 molppm or higher but 1000000 molppm or less, the hydrogen/propylene ratio in the step 2-1 may be 75 molppm or higher but 750 molppm or less, the hydrogen/propylene ratio in the step 2-2 may be 300 molppm or higher but 20000 molppm or less, and the hydrogen/propylene ratio in the step 3 may be 15000 molppm or higher but 200000 molppm or less.

EXAMPLES

In the following, the present invention will be described more specifically, referring to Examples. It should be noted that the present invention is not limited to these Examples.

Measurement methods and evaluation methods of properties in the Examples and Comparative Examples are described below.

[Limiting Viscosity ([η], unit: dL/g)]

Reduced viscosities were measured at three points of concentrations of 0.1 g/dL, 0.2 g/dL, and 0.5 g/d by using an Ubbelohde viscometer. The limiting viscosity was worked out by the calculation method described on a reference literature "Polymer Solution, Polymer Experiment 11" (Kobunshi Yoeki, Kobunshi Jikkengaku 11) (published in 1982 by KYORITSU SHUPPAN CO., LTD.), item 491, that is, an extrapolation method including plotting the reduced viscosities against the concentration and performing extrapolation of the concentrations to zero. The measurement was carried out at a temperature of 135°C with tetralin as a solvent.

[Ethylene Unit Content in Heterophasic Propylene Polymeric Material thus Produced (Unit: mass%)]

Based on the IR spectroscopy described on page 619 of Polymer Handbook (published in 1995 by Kinokuniya Company Ltd.), ethylene unit contents in the heterophasic propylene polymeric materials thus obtained were determined by the IR spectroscopy. Here, what is meant by the word "ethylene unit" is a structural unit derived from ethylene. An ethylene content in the propylene copolymer C was determined by dividing the ethylene content in the heterophasic propylene polymeric material by the ratio (x) of the ethylene-propylene copolymer in the heterophasic propylene polymeric material. Note that the ratio (x) of the ethylene-propylene copolymer in the heterophasic propylene polymeric material was worked out by a method described later.

Evaluations of dimensional stability and gel count of the Examples and Comparative Examples were carried out with pellets prepared by the following method. Into 100 parts by weight of a heterophasic propylene polymeric material, 0.05 parts by weight of calcium stearate (available from Nippon Oil & Fats Co., Ltd.), 0.1 parts by weight of octadecyl-3-(3,5-di-t-butyl-4-hydroxyphenyl)propionate, and 0.1 parts by weight of 6-[3-(3-t-butyl-4-hydroxy-5-methylphenyl)propoxy]-2,4,8,10-tetra-t-butyldibenzo[d,f][1.3.2]dioxaphosphepin (Sumilizer GP, available from Sumitomo Chemical Co., Ltd.) were mixed, and a mixture thus obtained was melted, mixed, and kneaded by using a single-screw extruder (available from Tanabe Plastics Co., Ltd.; barrel inner diameter: 40 mm, screw rotational speed: 100 rpm, cylinder temperature: 200°C), and a product of the melting, mixing and kneading was extruded through a die section. The extruded was solidified by cooling with cool water, and cut into pellets.

[Dimensional Stability]

The heterophasic propylene polymeric materials of Examples and Comparative Examples thus prepared into the pellets according to the method as described above were evaluated in dimensional stability by measuring a linear expansion coefficient of an injection-molded article obtained by injection-molding the heterophasic propylene polymeric material thus pelleted.

[Preparation of Injection-Molded Article]

The heterophasic propylene polymeric materials were injection-molded under the following conditions, thereby preparing injection-molded articles. The injection molding was carried out under such conditions that SE 180D available from Sumitomo Heavy Industries, Ltd. was used as an injection molding device, a clamping force was 180 ton, a mold had a size of 100 mm × 400 mm × 3 mm (thickness) and a one-point gate at an end surface thereof, a molding temperature was 180°C, an injection speed was 5 mm/sec, and a molding temperature was 30°C.

[Measurement of Linear Expansion Coefficient]

Liner expansion coefficients of the injection-molded article were measured by the following method using a thermomechanical analysis apparatus TMA/SS6100 available from SII NanoTechnology Inc.

From a center part of an injection-molded article in a longitudinal direction, a test piece of 5 × 10 × 3 (mm) was cut out. The test piece was set to the apparatus and heated from -50°C to 130°C at a heating rate of 5°C/min, thereby removing residual distortion caused in molding. After that, the test piece was reset to the apparatus in such a way that a dimensional change in the MD direction (a flow direction of the resin) or the TD direction (a direction perpendicular to the MD direction) of the injection molding could be measured, and the dimensions of the test piece at 23°C was measured accurately. The test piece was heated from -20 to 80°C at a heating rate of 5°C/min and the dimensional changes in the MD direction and the TD direction during the heating were measured. The dimensional changes per unit length and per unit temperature were worked out as the linear expansion coefficients. A value obtained by dividing a sum of the linear expansion coefficient of the MD direction and the linear expansion coefficient of the TD direction by 2 was taken as "MDTD average linear expansion coefficient" (unit: 1/°C). A smaller MDTD average linear expansion coefficient indicates a better dimensional stability.

[Gel Count]

The number of gels found on a sheet obtained by extruding a heterophasic propylene polymeric material thus pelleted according to the method as above of the Examples and Comparative Examples was counted.

[Preparation of Sheet]

The sheet for counting the gel count was prepared according to the following method. The material was extruded at a resin temperature of 230°C into a sheet form from a single-screw extruder (VS20-14 available from Tanabe Plastics Machinery Co., Ltd.) with a screw diameter of 20 mm, and the extruded in the sheet form was cooled by using a cooling roller, through which cooling water of 30°C was passed through, thereby preparing a sheet with a thickness of 50 $\mu$m.

[Counting of Gel Count]

A surface of the sheet was scanned by using a scanner GT-X970 available from Seiko Epson Corp., thereby obtaining an image of the surface of the sheet. The image of the surface of the sheet thus obtained was imported into a computer as 8-bit data with 900 dpi, and the image was processed by image thresholding in such a way that portions with a threshold value of 120 or higher were white and portions with a threshold value of less than 120 were black. For the image thresholding, image analysis software "A-zokun" available from Asahi Kasei Engineering Corporation was used. The white portions were considered as gels. Because the gels have irregular shapes, equivalent circle diameters of the gels were taken as sizes of the gels. The number of gels of 100 $\mu$m or greater in with diameter per 100 cm$^2$ of the sheet was counted (unit: number/100 cm$^2$).

[Reference Example: Preparation of Solid Catalyst Component]

After a 100-mL flask with a stirrer, a dropping funnel, and a thermometer was purge with nitrogen, 36.0 mL of toluene and 22.5 mL of titanium tetrachloride were added and stirred in the flask, thereby obtaining a titanium tetrachloride solution. After the temperature in the flask was cooled to 0°C, 1.88 g of magnesium diethoxide was added 4 times with 30-min intervals at 0°C, and a mixture thus obtained was stirred at 0°C for 1.5 hours. Then, after 0.60 mL of 2-ethoxymethyl-3,3-dimethylethylbutyrate was added in the flask, the temperature in the flask was increased to 10°C. After that, the content was stirred at 10°C for 2 hours, and then 9.8 mL of toluene was added. Next, the temperature in the flask was increased, and 3.15 mL of 2-ethoxymethyl-3,3-dimethylethylbutyrate was added therein when the temperature was 60°C, and the temperature was increased to 110°C. A mixture thus obtained in the flask was stirred at 110°C for 3 hours.

The mixture thus obtained was subject to solid-liquid separation, thereby obtaining a solid. The solid was washed with 56.3 mL of toluene three times at 100°C.

To the solid thus washed, 38.3 mL of toluene was added, so as to form a slurry. To the slurry, 15.0 mL of titanium tetrachloride and 0.75 mL of ethyl 2-ethoxymethyl-3,3-dimethylethylbutyrate were introduced, thereby obtaining a mixture, and the mixture was stirred at 110°C for one hour. After that, the mixture thus stirred was subjected to solid-liquid separation, and a resultant solid was washed with 56.3 mL of toluene three times at 60°C, and further washed with 56.3 mL of hexane three times at a room temperature. The solid after the washing was dried under reduced pressure, thereby obtaining a solid catalyst component.

The solid catalyst component was such that its titanium atom content was 2.53 mass% and ethoxy group content was 0.44 mass%, and inner electron donor content was 13.7 mass%. Furthermore, the solid catalyst component was such that a median particle size measured by the laser diffraction and scattering method was 59.5 $\mu$m, and had such a volume-based particle size distribution that cumulative percentage of particles of 10 $\mu$m or less in diameter was 5.3%. XPS analysis showed that an amount of a peak component having a bonding energy derived from the 1s orbital of an oxygen atom and peaked within a range of 532-534 eV was 85.0%, and an amount of a peak component having a bonding energy derived from the 1s orbital of an oxygen atom and peaked within a range of 529-532 eV was 15.0%. A mercury press-in method showed that a total pore volume was 1.43 mL/g, a total volume of pores with pore diameters of 5-30 nm was 0.160 mL/g, a total volume of pores with pore diameters of 30-700 nm was 0.317 mL/g, and a specific surface area was 107.44 $m^2$/g.

[Example 1: Preparation of Heterophasic Propylene polymeric material]

[Preliminary Polymerization]

Into an SUS-made autoclave of an inner capacity of 3 L with a stirring device, 1.0 L of n-hexane, 35 mmol of triethyl aluminum (which may be abbreviated as "TEA" below), 3.5 mmol of tert-butyl-n-propyl dimethoxy silane, each of which had been sufficiently dehydrated and deaerated, were accommodated. Preliminary polymerization was performed in such a way that 22 g of a solid catalyst component prepared in Reference Example was added therein, and while a temperature in the autoclave was kept at about 10°C, 22 g of propylene was continuously fed therein over about 30 min. After that, a slurry of the preliminary polymerization was transferred to an SUS316L-made autoclave with an internal capacity of 150 L and a stirring device, and 100 L of liquid butane was added in the slurry of the preliminary polymerization, thereby obtaining a slurry of the preliminary polymerization catalyst component.

[Polymerization]

For polymerization, a slurry polymerization reactor, a multi-stage gas-phase polymerization reactor, and a device including two of gas-phase polymerization reactor vessels provided in series were used. More specifically, a propylene homopolymer was produced by a polymerization step 1-1, a polymerization step 1-2, and, a polymerization step 2 as described below, and the propylene homopolymer thus produced was transferred, without inactivation, to the following stage, in which an ethylene-propylene copolymer was produced in a polymerization step 3 as described below.

[Polymerization Step 1-1 (Propylene Homopolymerization in the Slurry Polymerization Reactor)]

By using the slurry polymerization reactor of a SUS304-made vessel type provided with a stirrer, propylene homopolymerization was carried out. That is, the polymerization reaction was carried out with propylene, hydrogen, TEA, tert-butyl-n-propyl dimethoxy silane, and the slurry of the preliminary polymerization catalyst component thus obtained to the reactor continuously supplied. Reaction conditions were as follows.
Polymerization Temperature: 50°C
Stirring Speed: 150 rpm
Liquid Level in the Reactor: 18 L
Amount of Propylene Supplied: 25 kg/hour
Amount of Hydrogen Supplied: 160 NL/hour
Hydrogen/Propylene Ratio: 12000 molppm
Amount of TEA: 31.3 mmol/hour
Amount of tert-butyl-n-propyl dimethoxy silane: 6.39 mmol/hour Amount of the Slurry of the Preliminary Polymerization Catalyst Component Supplied (based on Polymerization Catalyst Component): 0.94 g/hour
Polymerization Pressure: 3.93 MPa (Gauge Pressure)

A limiting viscosity [n]L1 of the propylene homopolymer sampled from an outlet of the slurry polymerization reactor was 0.69 dL/g.
The hydrogen/propylene ratios of Examples and Comparative Examples indicate a quantitative ratio of hydrogen gas and liquid propylene at a feeding section of the reactor for hydrogen/propylene for the cases of the vessel-type slurry polymerization reactor and the loop-type liquid phase polymerization reactor, while hydrogen/propylene ratios of Examples and Comparative Examples indicate a quantitative ratio of hydrogen gas and propylene gas at an outlet of the reactor for the case of the gas-phase polymerization reactor.

[Polymerization Step 1-2 (Propylene Homopolymerization (Gas Phase Polymerization)) by the Multi-Stage Gas-Phase Polymerization Reactor]

Propylene homopolymerization was carried out by using a multi-stage gas-phase polymerization reactor with 6 stages of reaction regions in a perpendicular direction, the upmost one of which was a fluidized bed and the other 5 of which were spouted bed.

From the preceding slurry polymerization reactor to the upmost-stage fluidized bed of the multi-stage gas-phase polymerization reactor, the slurry containing polypropylene particles and liquid propylene was continuously supplied without inactivation.

Inter-stage transfer of the polypropylene particles within the multi-stage gas-phase polymerization reactor was carried out by double valve scheme. This transfer scheme is configured such that an upstream reaction region and a downstream reaction region are connected with each other via a one inch-sized pipe provided with two on-off valves, and an upstream one of the on-off valves is opened while a downstream one of the on-off valves is closed, so that the powders are moved into a space between the on-off valves from the upstream reaction region and retained in the space, and after the upstream one of the on-off valves is closed thereafter, the downstream one of the on-off valves is opened, so that the polypropylene particles are moved into the downstream reaction region.

Propylene and hydrogen were continuously supplied to the multi-stage gas-phase polymerization reactor of such a configuration from below.

In this way, the propylene homopolymerization was further proceeded by forming the fluidized bed or spouted bed in the respective reaction regions, and controlling the amounts of propylene and hydrogen supplied and purging excess gas in such a way that the gas composition and pressure were kept constant. Reaction conditions were as follows.

Polymerization Temperature: 80°C
Polymerization Pressure: 1.80 MPa (Gauge Pressure)

The reactor was such that the hydrogen/propylene ratio within the reactor was set to 230000 molppm.

A limiting viscosity $[\eta]G1$ of the propylene homopolymer sampled from an outlet of the reactor was 0.65 dL/g. With $[\eta]L1$ and $[\eta]G1$ substantially equal in value, the propylene homopolymer obtained by the process up to the polymerization step 1-2 was a propylene-based polymer A. In Example 1, $[\eta]G1$ is the limiting viscosity of the propylene-based polymer A.

[Polymerization Step 2 (Propylene Homopolymerization (Gas-Phase Polymerization) by Fluidized-Bed Type Reactor]

The polypropylene particles discharged from the multi-stage gas phase polymerization reactor of the preceding stage were continuously supplied to a fluidized bed-type reactor. The fluidized bed-type olefin polymerization reactor includes a gas distributing plate, and the double valve scheme was adopted as means for transferring the polypropylene particles from the multi-stage gas-phase polymerization reactor of the preceding stage to the fluidized-bed type reactor.

The propylene homopolymerization was carried out in the present of the polypropylene particles by continuously supplying propylene and hydrogen to the fluidized-bed type reactor configured as above, and adjusting the amounts of the gases supplied and purging excess gas in such a way that the gas composition and pressure were kept constant. Reaction conditions were as follows.

Polymerization Temperature: 80°C
Polymerization Pressure: 1.76 MPa (Gauge Pressure)

The reactor was such that hydrogen/propylene ratio of the gases at the outlet of the reactor was set to 1700 molppm.

A limiting viscosity [η] G2 of the propylene-based polymer sampled from an outlet of the reactor was 1.05 dL/g. The polymer obtained from the outlet of the reactor in the polymerization step 2 was a mixture of the propylene-based polymer A and the propylene-based polymer B. The limiting viscosity $[\eta]B$ of the propylene-based polymer B was calculated by the following method.

$$[\eta]B = ([\eta]G2 - [\eta]G1 \times xi)/xii \quad \cdots (5)$$

where xi: a mass ratio of the propylene-based polymer A with respect to the total mass of the polymer obtained from the outlet of the reactor in the polymerization step 2 (the mass of propylene-based polymer A/(the sum of the mass of the propylene-based polymer A and the propylene-based polymer B),
where xii: a mass ratio of the propylene-based polymer B with respect to the total mass of the polymer obtained from the outlet of the reactor in the polymerization step 2 (the mass of propylene-based polymer B/(the sum of the mass of the propylene-based polymer A and the propylene-based polymer B).

Here, xi and xii can be determined from mass balances of the polymerizations.

[Polymerization Step 3 (Propylene-Ethylene Copolymerization (Gas-Phase Polymerization) by Fluidized-Bed Type Reactor]

The polypropylene particles discharged from the fluidized bed-type reactor of the polymerization step 2 were continuously supplied to a fluidized bed-type reactor of a further following stage. The fluidized-bed type reactor in the polymerization step 3 includes a distributing plate as in the fluidized-bed type reactor in the polymerization step 2, and the double valve scheme was adopted as means for transferring the polypropylene particles from the fluidized-bed type reactor in the polymerization step 2 to the fluidized-bed type reactor in the polymerization step 3.

The copolymerization of propylene and ethylene was carried out in the presence of the polypropylene particles by continuously supplying propylene, ethylene, and hydrogen in the fluid bed-type reactor configured as above, and controlling the amounts of the gases supplied and purging extra gas in such a way as to maintain a constant gas composition and a constant pressure therein, thereby obtaining a heterophasic propylene polymeric material. Reaction conditions were as follows.

Polymerization Temperature: 70°C
Polymerization Pressure: 1.72 MPa (Gauge Pressure)

A concentration ratio of the gases at the outlet of the reactor was such that ethylene / (propylene + ethylene) was 38.4mol%, and hydrogen / propylene was 69000 molppm.

A ratio (X) of the ethylene-propylene copolymer in the heterophasic propylene polymeric material thus obtained was worked out by measuring crystal melting heat quantities of the propylene homopolymer and the whole heterophasic propylene polymeric material, and calculating the following equation. The crystal melting heat quantities were measured by differential scanning calorimetry (DSC).

$$X = 1 - (\Delta Hf)T / (\Delta Hf)P$$

where($\Delta Hf)T$: the melting heat quantity (J/g) of the whole heterophasic propylene polymeric material, and
$(\Delta Hf)P$: the melting heat quantity (J/g) of propylene homopolymer

A limiting viscosity $[\eta]G3$ of the propylene-based polymer sampled from an outlet of the reactor was 1.33 dL/g. The polymer obtained from the outlet of the reactor in the polymerization step 3 was a mixture of the propylene-based polymer A, the propylene-based polymer B, and the propylene-based polymer C. The limiting viscosity $[\eta]C$ of the propylene-based polymer C was calculated by the following method.

$$[\eta]C = ([\eta]G3 - [\eta]G2 \times (1 - X))/X \cdots (6)$$

The heterophasic propylene polymeric material thus obtained was such that its limiting viscosity ($[\eta]$Total) was 1.33 dL/g and ethylene content was 9.4 mass%. Moreover, a polymerization ratio of the propylene-based polymer A, the propylene-based polymer B, and the propylene-based polymer C was 65/12/23. The propylene-based polymer C was such that its ethylene content was 41 mass%, and the limiting viscosity $[\eta]C$ of the propylene-based polymer C was 2.3 dL/g.

[Example 2: Preparation of Heterophasic Propylene Polymeric Material]

[Preliminary Polymerization]

Into an SUS-made autoclave with an internal volume of 3 L equipped with a stirrer, 1.4 L of n-hexane, TEA 49 mmol, and 4.9 mmol of tert-butyl-n-propyl dimethoxy silane, which were sufficiently dehydrated and deaerated, were accommodated. Preliminary polymerization was performed in such a way that 21 g of a solid catalyst component prepared in Reference Example was added therein, and while a temperature in the autoclave was kept at about 10°C, 103 g of propylene was continuously fed therein over about 30 min. After that, a slurry of the preliminary polymerization was transferred to an SUS316L-made autoclave with an internal capacity of 260 L and a stirring device, and 180 L of liquid butane was added in the slurry of the preliminary polymerization, thereby obtaining a slurry of the preliminary polymerization catalyst component.

[Polymerization]

For polymerization, a slurry polymerization reactor, a multi-stage gas-phase polymerization reactor, and a device including two of gas-phase polymerization reactor vessels provided in series were used. More specifically, a propylene homopolymer was produced by a polymerization step 1-1, a polymerization step 1-2, and, a polymerization step 2 as described below, and the propylene homopolymer thus produced was transferred, without inactivation, to the following stage, in which an ethylene-propylene copolymer was produced in a polymerization step 3 as described below.

[Polymerization Step 1-1 (Propylene Homopolymerization in the Slurry Polymerization Reactor)]

By using the slurry polymerization reactor of a SUS304-made vessel type provided with a stirrer, propylene homopolymerization was carried out. That is, the polymerization reaction was carried out with propylene, hydrogen, TEA, tert-butyl-n-propyl dimethoxy silane, and the slurry of the preliminary polymerization catalyst component thus obtained to the reactor continuously supplied. Reaction conditions were as follows.
Polymerization Temperature: 50°C
Stirring Speed: 150 rpm
Liquid Level in the Reactor: 18 L
Amount of Propylene Supplied: 25 kg/hour
Amount of Hydrogen Supplied: 150 NL/hour
Hydrogen/Propylene Ratio: 11300 molppm
Amount of TEA: 34.3 mmol/hour
Amount of tert-butyl-n-propyl dimethoxy silane Supplied: 7.76 mmol/hour
Slurry of Preliminary polymerization Catalyst Component Supplied (based on the polymerization catalyst component): 0.72 g/hour
Polymerization Pressure: 3.99 MPa (Gauge Pressure)

A limiting viscosity [n]L1 of the propylene homopolymer sampled from an outlet of the slurry polymerization reactor was 0.65 dl/g.

[Polymerization Step 1-2 (Propylene Homopolymerization (Gas-Phase Polymerization) Using Multi-stage Gas-Phase Polymerization Reactor)]

By using a multi-stage gas-phase polymerization reactor with 6 stages of reaction regions connected in the perpendicular direction, an upmost one of which was a fluidized bed, and remaining 5 of which were spouted beds, propylene homopolymerization was carried out.
From the preceding slurry polymerization reactor to the upmost-stage fluidized bed of the multi-stage gas-phase polymerization reactor, the slurry containing polypropylene particles and liquid propylene was continuously supplied without inactivation.
Inter-stage transfer of the polypropylene particles within the multi-stage gas-phase polymerization reactor was carried out by double valve scheme. This transfer scheme is configured such that an upstream reaction region and a downstream reaction region are connected with each other via a one inch-sized pipe provided with two on-off valves, and an upstream one of the on-off valves is opened while a downstream one of the on-off valves is closed, so that the powders are moved into a space between the on-off valves from the upstream reaction region and retained in the space, and after the upstream one of the on-off valves is closed thereafter, the downstream one of the on-off valves is opened, so that the polypropylene particles are moved into the downstream reaction region.
Propylene and hydrogen were continuously supplied to the multi-stage gas-phase polymerization reactor of such a configuration from below. In this way, the propylene homopolymerization was further proceeded by forming the fluidized bed or spouted bed in the respective reaction regions, and controlling the amounts of propylene and hydrogen supplied and purging excess gas in such a way that the gas composition and pressure were kept constant. Reaction conditions were as follows.
Polymerization Temperature: 80°C
Polymerization Pressure: 1.99 MPa (Gauge Pressure)

The reactor was such that the hydrogen/propylene ratio within the reactor was set to 229000 molppm.
A limiting viscosity $[\eta]G1$ of the propylene homopolymer sampled from an outlet of the reactor was 0.68 dl/g. With $[\eta]L1$ and $[\eta]G1$ substantially equal in value, the propylene homopolymer obtained by the process up to the polymerization step 1-2 was a propylene-based polymer A. In Example 2, $[\eta]G1$ is the limiting viscosity of the propylene-based polymer A.

[Polymerization Step 2 (Propylene Homopolymerization (Gas-Phase Polymerization) by Fluidized-Bed Type Reactor]

The polypropylene particles discharged from the multi-stage gas phase polymerization reactor of the preceding stage were continuously supplied to a fluidized bed-type reactor. The fluidized bed-type olefin polymerization reactor includes a gas distributing plate, and the double valve scheme was adopted as means for transferring the polypropylene particles from the multi-stage gas-phase polymerization reactor of the preceding stage to the fluidized-bed type reactor.
The propylene homopolymerization was carried out in the present of the polypropylene particles by continuously supplying propylene and hydrogen to the fluidized-bed type reactor configured as above, and adjusting the amounts of the gases supplied and purging excess gas in such a way that the gas composition and pressure were kept constant. Reaction conditions were as follows.
Polymerization Temperature: 80°C
Polymerization Pressure: 1.59 MPa (Gauge Pressure)

The reactor was such that hydrogen/propylene ratio of the gases at the outlet of the reactor was set to 2100 molppm.
A limiting viscosity $[\eta]G2$ of the propylene-based polymer sampled from an outlet of the reactor was 1.14 dl/g. The polymer obtained from the outlet of the reactor in the polymerization step 2 was a mixture of the propylene-based polymer A and the propylene-based polymer B. The limiting viscosity $[\eta]B$ of the propylene-based polymer B was calculated by the same method as in Example 1.

[Polymerization Step 3 (Propylene-Ethylene Copolymerization (Gas-Phase Polymerization) by Fluidized-Bed Type Reactor]

The polypropylene particles discharged from the fluidized bed-type reactor of the polymerization step 2 were continuously supplied to a fluidized bed-type reactor of a further following stage. The fluidized-bed type reactor in the polymerization step 3 includes a distributing plate as in the fluidized-bed type reactor in the polymerization step 2, and the double valve scheme was adopted as means for transferring the polypropylene particles from the fluidized-bed type reactor in the polymerization step 2 to the fluidized-bed type reactor in the polymerization step 3.
Into the fluidized-bed type reactor configured as above, tetraethoxy silane of an amount equivalent to 2.0 mol per 1 mol of triethyl aluminum supplied in the polymerization step 1-1 was added. The copolymerization of propylene and ethylene was carried out in the presence of the polypropylene particles by continuously supplying propylene, ethylene, and hydrogen in the reactor, and controlling the amounts of the gases supplied and purging extra gas in such a way as to maintain a constant gas composition and a constant pressure therein, thereby obtaining a heterophasic propylene polymeric material. Reaction conditions were as follows.
Polymerization Temperature: 70°C
Polymerization Pressure: 1.54 MPa (Gauge Pressure)

A concentration ratio of the gases at the outlet of the reactor was such that ethylene / (propylene + ethylene) was 30.8mol%, and hydrogen / propylene was 52300 molppm.
The ratio (x) of the ethylene-propylene copolymer in the heterophasic propylene polymeric material thus obtained was worked out by the same method as in Example 1.
A limiting viscosity $[\eta]O3$ of the propylene-based polymer sampled from an outlet of the reactor was 1.21 dl/g.

The polymer obtained from the outlet of the reactor in the polymerization step 3 was a mixture of the propylene-based polymer A, the propylene-based polymer B, and the propylene-based polymer C. The limiting viscosity $[\eta]C$ of the propylene-based polymer C was calculated by the same method as in Example 1.

The heterophasic propylene polymeric material thus obtained was such that its limiting viscosity $([\eta]Total)$ was 1.21 dL/g and ethylene content was 4.9 mass%. Moreover, a polymerization ratio of the propylene-based polymer A, the propylene-based polymer B, and the propylene-based polymer C was 72/18/10. The propylene-based polymer C was such that its ethylene content was 51 mass%, and the limiting viscosity $[\eta]C$ of the propylene-based polymer C was 1.9 dL/g.

[Example 3: Preparation of Heterophasic Propylene Polymeric Material]

[Preliminary Polymerization]

Into an SUS-made autoclave with an internal volume of 3 L equipped with a stirrer, 1.7 L of n-hexane, TEA 60 mmol, and 6.0 mmol of tert-butyl-n-propyl dimethoxy silane, which were sufficiently dehydrated and deaerated, were accommodated. Preliminary polymerization was performed in such a way that 25 g of a solid catalyst component prepared in Reference Example was added therein, and while a temperature in the autoclave was kept at about 10°C, 25 g of propylene was continuously fed therein over about 30 min. After that, a slurry of the preliminary polymerization was transferred to an SUS316L-made autoclave with an internal capacity of 260 L and a stirring device, and 180 L of liquid butane was added in the slurry of the preliminary polymerization, thereby obtaining a slurry of the preliminary polymerization catalyst component.

[Polymerization]

For polymerization, a slurry polymerization reactor, a multi-stage gas-phase polymerization reactor, and a device including two of gas-phase polymerization reactor vessels provided in series were used. More specifically, a propylene homopolymer was produced by a polymerization step 1-1, a polymerization step 1-2, and, a polymerization step 2 as described below, and the propylene homopolymer thus produced was transferred, without inactivation, to the following stage, in which an ethylene-propylene copolymer was produced in a polymerization step 3 as described below.

[Polymerization Step 1-1 (Propylene Homopolymerization in the Slurry Polymerization Reactor)]

By using the slurry polymerization reactor of a SUS304-made vessel type provided with a stirrer, propylene homopolymerization was carried out. That is, the polymerization reaction was carried out with propylene, hydrogen, TEA, tert-butyl-n-propyl dimethoxy silane, and the slurry of the preliminary polymerization catalyst component thus obtained to the reactor continuously supplied. Reaction conditions were as follows.

Polymerization Temperature: 50°C
Stirring Speed: 150 rpm
Liquid Level in the Reactor: 18 L
Amount of Propylene Supplied: 25 kg/hour
Amount of Hydrogen Supplied: 175 NL/hour
Hydrogen/Propylene Ratio: 13100 molppm
Amount of TEA: 34.7 mmol/hour
Amount of tert-butyl-n-propyl dimethoxy silane Supplied: 7.15 mmol/hour
Slurry of Preliminary polymerization Catalyst Component Supplied (based on the polymerization catalyst component): 0.96 g/hour
Polymerization Pressure: 4.12 MPa (Gauge Pressure)

A limiting viscosity $[\eta]L1$ of the propylene homopolymer sampled from an outlet of the slurry polymerization reactor was 0.64 dl/g.

[Polymerization Step 1-2 (Propylene Homopolymerization (Gas-Phase Polymerization) using Multi-stage Gas-Phase Polymerization Reactor)]

By using a multi-stage gas-phase polymerization reactor with 6 stages of reaction regions connected in the perpendicular direction, an upmost one of which was a fluidized bed, and remaining 5 of which were spouted beds, propylene homopolymerization was carried out.

From the preceding slurry polymerization reactor to the upmost-stage fluidized bed of the multi-stage gas-phase polymerization reactor, the slurry containing polypropylene particles and liquid propylene was continuously supplied without inactivation.

Inter-stage transfer of the polypropylene particles within the multi-stage gas-phase polymerization reactor was carried out by double valve scheme. This transfer scheme is configured such that an upstream reaction region and a downstream reaction region are connected with each other via a one inch-sized pipe provided with two on-off valves, and an upstream one of the on-off valves is opened while a downstream one of the on-off valves is closed, so that the powders are moved into a space between the on-off valves from the upstream reaction region and retained in the space, and after the upstream one of the on-off valves is closed thereafter, the downstream one of the on-off valves is opened, so that the polypropylene particles are moved into the downstream reaction region.

Propylene and hydrogen were continuously supplied to the multi-stage gas-phase polymerization reactor of such a configuration from below. In this way, the propylene homopolymerization was further proceeded by forming the fluidized bed or spouted bed in the respective reaction regions, and controlling the amounts of propylene and hydrogen supplied and purging excess gas in such a way that the gas composition and pressure were kept constant. Reaction conditions were as follows.

    Polymerization Temperature: 80°C
    Polymerization Pressure: 2.00 MPa (Gauge Pressure)

The reactor was such that the hydrogen/propylene ratio within the reactor was set to 255000 molppm.

A limiting viscosity $[\eta]G1$ of the propylene homopolymer sampled from an outlet of the reactor was 0.64 dl/g. With $[\eta]L1$ and $[\eta]G1$ substantially equal in value, the propylene homopolymer obtained by the process up to the polymerization step 1-2 was a propylene-based polymer A. In Example 3, $[\eta]G1$ is the limiting viscosity of the propylene-based polymer A.

[Polymerization Step 2 (Propylene Homopolymerization (Gas-Phase Polymerization) by Fluidized-Bed Type Reactor]

The polypropylene particles discharged from the multi-stage gas phase polymerization reactor of the preceding stage were continuously supplied to a fluidized bed-type reactor. The fluidized bed-type olefin polymerization reactor includes a gas distributing plate, and the double valve scheme was adopted as means for transferring the polypropylene particles from the multi-stage gas-phase polymerization reactor of the preceding stage to the fluidized-bed type reactor.

The propylene homopolymerization was carried out in the present of the polypropylene particles by continuously supplying propylene and hydrogen to the fluidized-bed type reactor configured as above, and adjusting the amounts of the gases supplied and purging excess gas in such a way that the gas composition and pressure were kept constant. Reaction conditions were as follows.

    Polymerization Temperature: 80°C
    Polymerization Pressure: 1.60 MPa (Gauge Pressure)

The reactor was such that hydrogen/propylene ratio of the gases at the outlet of the reactor was set to 1800 molppm.

A limiting viscosity $[\eta]G2$ of the propylene-based polymer sampled from an outlet of the reactor was 0.94 dl/g. The polymer obtained from the outlet of the reactor in the polymerization step 2 was a mixture of the propylene-based polymer A and the propylene-based polymer B. The limiting viscosity $[\eta]B$ of the propylene-based polymer B was calculated by the same method as in Example 1.

[Polymerization Step 3 (Propylene-Ethylene Copolymerization (Gas-Phase Polymerization) by Fluidized-Bed Type Reactor]

The polypropylene particles discharged from the fluidized bed-type reactor of the polymerization step 2 were continuously supplied to a fluidized bed-type reactor of a further following stage. The fluidized-bed type reactor in the polymerization step 3 includes a distributing plate as in the fluidized-bed type reactor in the polymerization step 2, and the double valve scheme was adopted as means for transferring the polypropylene particles from the fluidized-bed type reactor in the polymerization step 2 to the fluidized-bed type reactor in the polymerization step 3.

The copolymerization of propylene and ethylene was carried out in the presence of the polypropylene particles by continuously supplying propylene, ethylene, and hydrogen in the fluid bed-type reactor configured as above, and controlling the amounts of the gases supplied and purging extra gas in such a way as to maintain a constant gas composition and a constant pressure therein, thereby obtaining a heterophasic propylene polymeric material. Reaction conditions were as follows.

    Polymerization Temperature: 70°C
    Polymerization Pressure: 1.39 MPa (Gauge Pressure)

A concentration ratio of the gases at the outlet of the reactor was such that ethylene / (propylene + ethylene) was 40.1mol%, and hydrogen / propylene was 71000 molppm.

The ratio (x) of the ethylene-propylene copolymer in the heterophasic propylene polymeric material thus obtained was worked out by the same method as in Example 1.

A limiting viscosity [η]G3 of the propylene-based polymer sampled from an outlet of the reactor was 1.31 dl/g. The polymer obtained from the outlet of the reactor in the polymerization step 3 was a mixture of the propylene-based polymer A, the propylene-based polymer B, and the propylene-based polymer C. The limiting viscosity [η]C of the propylene-based polymer C was calculated by the same method as in Example 1.

The heterophasic propylene polymeric material thus obtained was such that its limiting viscosity ([η]Total) was 1.31 dL/g and ethylene content was 9.0 mass%. Moreover, a polymerization ratio of the propylene-based polymer A, the propylene-based polymer B, and the propylene-based polymer C was 72/8/20. The propylene-based polymer C was such that its ethylene content was 45 mass%, and the limiting viscosity [η]C of the propylene-based polymer C was 2.8 dL/g.

[Example 4: Preparation of Heterophasic Propylene Polymeric Material]

[Preliminary Polymerization]

Into an SUS-made autoclave with an internal volume of 3 L equipped with a stirrer, 1.7 L of n-hexane, TEA 60 mmol, and 6.0 mmol of tert-butyl-n-propyl dimethoxy silane, which were sufficiently dehydrated and deaerated, were accommodated. Preliminary polymerization was performed in such a way that 25 g of a solid catalyst component prepared in Reference Example was added therein, and while a temperature in the autoclave was kept at about 10°C, 25 g of propylene was continuously fed therein over about 30 min. After that, a slurry of the preliminary polymerization was transferred to an SUS316L-made autoclave with an internal capacity of 260 L and a stirring device, and 180 L of liquid butane was added in the slurry of the preliminary polymerization, thereby obtaining a slurry of the preliminary polymerization catalyst component.

[Polymerization]

For polymerization, a slurry polymerization reactor, a multi-stage gas-phase polymerization reactor, and a device including two of gas-phase polymerization reactor vessels provided in series were used. More specifically, a propylene homopolymer was produced by a polymerization step 1-1, a polymerization step 1-2, and, a polymerization step 2 as described below, and the propylene homopolymer thus produced was transferred, without inactivation, to the following stage, in which an ethylene-propylene copolymer was produced in a polymerization step 3 as described below.

[Polymerization Step 1-1 (Propylene Homopolymerization in the Slurry Polymerization Reactor)]

By using the slurry polymerization reactor of a SUS304-made vessel type provided with a stirrer, propylene homopolymerization was carried out. That is, the polymerization reaction was carried out with propylene, hydrogen, TEA, tert-butyl-n-propyl dimethoxy silane, and the slurry of the preliminary polymerization catalyst component thus obtained to the reactor continuously supplied. Reaction conditions were as follows.

    Polymerization Temperature: 50°C
    Stirring Speed: 150 rpm
    Liquid Level in the Reactor: 18 L
    Amount of Propylene Supplied: 25 kg/hour
    Amount of Hydrogen Supplied: 176 NL/hour
    Hydrogen/Propylene Ratio: 13200 molppm

Amount of TEA: 37.9 mmol/hour
Amount of tert-butyl-n-propyl dimethoxy silane Supplied: 7.64 mmol/hour
Slurry of Preliminary polymerization Catalyst Component Supplied (based on the polymerization catalyst component): 1.0 g/hour
Polymerization Pressure: 4.12 MPa (Gauge Pressure)

A limiting viscosity $[\eta]$L1 of the propylene homopolymer sampled from an outlet of the slurry polymerization reactor was 0.64 dl/g.

[Polymerization Step 1-2 (Propylene Homopolymerization (Gas-Phase Polymerization) Using Multi-stage Gas-Phase Polymerization Reactor)]

By using a multi-stage gas-phase polymerization reactor with 6 stages of reaction regions connected in the perpendicular direction, an upmost one of which was a fluidized bed, and remaining 5 of which were spouted beds, propylene homopolymerization was carried out.
From the preceding slurry polymerization reactor to the upmost-stage fluidized bed of the multi-stage gas-phase polymerization reactor, the slurry containing polypropylene particles and liquid propylene was continuously supplied without inactivation.
Inter-stage transfer of the polypropylene particles within the multi-stage gas-phase polymerization reactor was carried out by double valve scheme. This transfer scheme is configured such that an upstream reaction region and a downstream reaction region are connected with each other via a one inch-sized pipe provided with two on-off valves, and an upstream one of the on-off valves is opened while a downstream one of the on-off valves is closed, so that the powders are moved into a space between the on-off valves from the upstream reaction region and retained in the space, and after the upstream one of the on-off valves is closed thereafter, the downstream one of the on-off valves is opened, so that the polypropylene particles are moved into the downstream reaction region.
Propylene and hydrogen were continuously supplied to the multi-stage gas-phase polymerization reactor of such a configuration from below. In this way, the propylene homopolymerization was further proceeded by forming the fluidized bed or spouted bed in the respective reaction regions, and controlling the amounts of propylene and hydrogen supplied and purging excess gas in such a way that the gas composition and pressure were kept constant. Reaction conditions were as follows.
Polymerization Temperature: 80°C
Polymerization Pressure: 2.00 MPa (Gauge Pressure)

The reactor was such that the hydrogen/propylene ratio within the reactor was set to 253000 molppm.
A limiting viscosity $[\eta]$G1 of the propylene homopolymer sampled from an outlet of the reactor was 0.64 dl/g. With $[\eta]$L1 and $[\eta]$G1 substantially equal in value, the propylene homopolymer obtained by the process up to the polymerization step 1-2 was a propylene-based polymer A. In Example 4, $[\eta]$G1 is the limiting viscosity of the propylene-based polymer A.

[Polymerization Step 2 (Propylene Homopolymerization (Gas-Phase Polymerization) by Fluidized-Bed Type Reactor)]

The polypropylene particles discharged from the multi-stage gas phase polymerization reactor of the preceding stage were continuously supplied to a fluidized bed-type reactor. The fluidized bed-type olefin polymerization reactor includes a gas distributing plate, and the double valve scheme was adopted as means for transferring the polypropylene particles from the multi-stage gas-phase polymerization reactor of the preceding stage to the fluidized-bed type reactor.
The propylene homopolymerization was carried out in the present of the polypropylene particles by continuously supplying propylene and hydrogen to the fluidized-bed type reactor configured as above, and adjusting the amounts of the gases supplied and purging excess gas in such a way that the gas composition and pressure were kept constant. Reaction conditions were as follows.
Polymerization Temperature: 80°C
Polymerization Pressure: 1.59 MPa (Gauge Pressure)

The reactor was such that hydrogen/propylene ratio of the gases at the outlet of the reactor was set to 1600 molppm.

A limiting viscosity [η]G2 of the propylene-based polymer sampled from an outlet of the reactor was 1.07 dl/g. The polymer obtained from the outlet of the reactor in the polymerization step 2 was a mixture of the propylene-based polymer A and the propylene-based polymer B. The limiting viscosity [η]B of the propylene-based polymer B was calculated by the same method as in Example 1.

[Polymerization Step 3 (Propylene-Ethylene Copolymerization (Gas-Phase Polymerization) by Fluidized-Bed Type Reactor]

The polypropylene particles discharged from the fluidized bed-type reactor of the polymerization step 2 were continuously supplied to a fluidized bed-type reactor of a further following stage. The fluidized-bed type reactor in the polymerization step 3 includes a distributing plate as in the fluidized-bed type reactor in the polymerization step 2, and the double valve scheme was adopted as means for transferring the polypropylene particles from the fluidized-bed type reactor in the polymerization step 2 to the fluidized-bed type reactor in the polymerization step 3.

The copolymerization of propylene and ethylene was carried out in the presence of the polypropylene particles by continuously supplying propylene, ethylene, and hydrogen in the fluid bed-type reactor configured as above, and controlling the amounts of the gases supplied and purging extra gas in such a way as to maintain a constant gas composition and a constant pressure therein, thereby obtaining a heterophasic propylene polymeric material. Reaction conditions were as follows.

Polymerization Temperature: 70°C
Polymerization Pressure: 1.49 MPa (Gauge Pressure)

A concentration ratio of the gases at the outlet of the reactor was such that ethylene / (propylene + ethylene) was 39.8mol%, and hydrogen / propylene was 70800 molppm.

The ratio (x) of the ethylene-propylene copolymer in the heterophasic propylene polymeric material thus obtained was worked out by the same method as in Example 1.

A limiting viscosity [η]G3 of the propylene-based polymer sampled from an outlet of the reactor was 1.30 dl/g. The polymer obtained from the outlet of the reactor in the polymerization step 3 was a mixture of the propylene-based polymer A, the propylene-based polymer B, and the propylene-based polymer C. The limiting viscosity [η]C of the propylene-based polymer C was calculated by the same method as in Example 1.

The heterophasic propylene polymeric material thus obtained was such that its limiting viscosity ([η]Total) was 1.30 dL/g and ethylene content was 9.1 mass%. Moreover, a polymerization ratio of the propylene-based polymer A, the propylene-based polymer B, and the propylene-based polymer C was 69/12/19. The propylene-based polymer C was such that its ethylene content was 47 mass%, and the limiting viscosity [η]C of the propylene-based polymer C was 2.3 dL/g.

[Example 5: Preparation of Heterophasic Propylene Polymeric Material]

[Preliminary Polymerization]

Into an SUS-made autoclave with an internal volume of 3 L equipped with a stirrer, 1.7 L of n-hexane, TEA 60 mmol, and 6.0 mmol of tert-butyl-n-propyl dimethoxy silane, which were sufficiently dehydrated and deaerated, were accommodated. Preliminary polymerization was performed in such a way that 25 g of a solid catalyst component prepared in Reference Example was added therein, and while a temperature in the autoclave was kept at about 10°C, 25 g of propylene was continuously fed therein over about 30 min. After that, a slurry of the preliminary polymerization was transferred to an SUS316L-made autoclave with an internal capacity of 260 L and a stirring device, and 180 L of liquid butane was added in the slurry of the preliminary polymerization, thereby obtaining a slurry of the preliminary polymerization catalyst component.

[Polymerization]

For polymerization, a slurry polymerization reactor, a multi-stage gas-phase polymerization reactor, and a device including two of gas-phase polymerization reactor vessels provided in series were used. More specifically, a propylene homopolymer was produced by a polymerization step 1-1, a polymerization step 1-2, and, a polymerization step 2 as described below, and the propylene homopolymer thus produced was transferred, without inactivation, to the following stage, in which an ethylene-propylene copolymer was produced in a polymerization step 3 as described below.

[Polymerization Step 1-1 (Propylene Homopolymerization in the Slurry Polymerization Reactor)]

By using the slurry polymerization reactor of a SUS304-made vessel type provided with a stirrer, propylene homopolymerization was carried out. That is, the polymerization reaction was carried out with propylene, hydrogen, TEA, tert-butyl-n-propyl dimethoxy silane, and the slurry of the preliminary polymerization catalyst component thus obtained to the reactor continuously supplied. Reaction conditions were as follows.
Polymerization Temperature: 50°C
Stirring Speed: 150 rpm
Liquid Level in the Reactor: 18 L
Amount of Propylene Supplied: 25 kg/hour
Amount of Hydrogen Supplied: 176 NL/hour
Hydrogen/Propylene Ratio: 13200 molppm
Amount of TEA: 37.9 mmol/hour
Amount of tert-butyl-n-propyl dimethoxy silane Supplied: 7.55 mmol/hour
Slurry of Preliminary polymerization Catalyst Component Supplied (based on the polymerization catalyst component): 0.96 g/hour
Polymerization Pressure: 4.12 MPa (Gauge Pressure)

A limiting viscosity $[\eta]$L1 of the propylene homopolymer sampled from an outlet of the slurry polymerization reactor was 0.66 dl/g.

[Polymerization Step 1-2 (Propylene Homopolymerization (Gas-Phase Polymerization) Using Multi-stage Gas-Phase Polymerization Reactor)]

By using a multi-stage gas-phase polymerization reactor with 6 stages of reaction regions connected in the perpendicular direction, an upmost one of which was a fluidized bed, and remaining 5 of which were spouted beds, propylene homopolymerization was carried out.
From the preceding slurry polymerization reactor to the upmost-stage fluidized bed of the multi-stage gas-phase polymerization reactor, the slurry containing polypropylene particles and liquid propylene was continuously supplied without inactivation.
Inter-stage transfer of the polypropylene particles within the multi-stage gas-phase polymerization reactor was carried out by double valve scheme. This transfer scheme is configured such that an upstream reaction region and a downstream reaction region are connected with each other via a one inch-sized pipe provided with two on-off valves, and an upstream one of the on-off valves is opened while a downstream one of the on-off valves is closed, so that the powders are moved into a space between the on-off valves from the upstream reaction region and retained in the space, and after the upstream one of the on-off valves is closed thereafter, the downstream one of the on-off valves is opened, so that the polypropylene particles are moved into the downstream reaction region.
Propylene and hydrogen were continuously supplied to the multi-stage gas-phase polymerization reactor of such a configuration from below. In this way, the propylene homopolymerization was further proceeded by forming the fluidized bed or spouted bed in the respective reaction regions, and controlling the amounts of propylene and hydrogen supplied and purging excess gas in such a way that the gas composition and pressure were kept constant. Reaction conditions were as follows.
Polymerization Temperature: 80°C
Polymerization Pressure: 1.99 MPa (Gauge Pressure)

The reactor was such that the hydrogen/propylene ratio within the reactor was set to 253000 molppm.
A limiting viscosity $[\eta]$G1 of the propylene homopolymer sampled from an outlet of the reactor was 0.66 dl/g. With $[\eta]$L1 and $[\eta]$G1 substantially equal in value, the propylene homopolymer obtained by the process up to the polymerization step 1-2 was a propylene-based polymer A. In Example 5, $[\eta]$G1 is the limiting viscosity of the propylene-based polymer A.

[Polymerization Step 2 (Propylene Homopolymerization (Gas-Phase Polymerization) by Fluidized-Bed Type Reactor)]

The polypropylene particles discharged from the multi-stage gas phase polymerization reactor of the preceding stage were continuously supplied to a fluidized bed-type reactor. The fluidized bed-type olefin polymerization reactor includes a gas distributing plate, and the double valve scheme was adopted as means for transferring the polypropylene particles from the multi-stage gas-phase polymerization reactor of the preceding stage to the fluidized-bed type reactor.

The propylene homopolymerization was carried out in the present of the polypropylene particles by continuously supplying propylene and hydrogen to the fluidized-bed type reactor configured as above, and adjusting the amounts of the gases supplied and purging excess gas in such a way that the gas composition and pressure were kept constant. Reaction conditions were as follows.

Polymerization Temperature: 79°C
Polymerization Pressure: 1.60 MPa (Gauge Pressure)

The reactor was such that hydrogen/propylene ratio of the gases at the outlet of the reactor was set to 1800 molppm.

A limiting viscosity $[\eta]G2$ of the propylene-based polymer sampled from an outlet of the reactor was 1.09 dl/g. The polymer obtained from the outlet of the reactor in the polymerization step 2 was a mixture of the propylene-based polymer A and the propylene-based polymer B. The limiting viscosity $[\eta]B$ of the propylene-based polymer B was calculated by the same method as in Example 1.

[Polymerization Step 3 (Propylene-Ethylene Copolymerization (Gas-Phase Polymerization) by Fluidized-Bed Type Reactor]

The polypropylene particles discharged from the fluidized bed-type reactor of the polymerization step 2 were continuously supplied to a fluidized bed-type reactor of a further following stage. The fluidized-bed type reactor in the polymerization step 3 includes a distributing plate as in the fluidized-bed type reactor in the polymerization step 2, and the double valve scheme was adopted as means for transferring the polypropylene particles from the fluidized-bed type reactor in the polymerization step 2 to the fluidized-bed type reactor in the polymerization step 3.

The copolymerization of propylene and ethylene was carried out in the presence of the polypropylene particles by continuously supplying propylene, ethylene, and hydrogen in the fluid bed-type reactor configured as above, and controlling the amounts of the gases supplied and purging extra gas in such a way as to maintain a constant gas composition and a constant pressure therein, thereby obtaining a heterophasic propylene polymeric material. Reaction conditions were as follows.

Polymerization Temperature: 70°C
Polymerization Pressure: 1.49 MPa (Gauge Pressure)

A concentration ratio of the gases at the outlet of the reactor was such that ethylene / (propylene + ethylene) was 34.3mol%, and hydrogen / propylene was 67600 molppm.

The ratio (x) of the ethylene-propylene copolymer in the heterophasic propylene polymeric material thus obtained was worked out by the same method as in Example 1.

A limiting viscosity $[\eta]G3$ of the propylene-based polymer sampled from an outlet of the reactor was 1.25 dl/g. The polymer obtained from the outlet of the reactor in the polymerization step 3 was a mixture of the propylene-based polymer A, the propylene-based polymer B, and the propylene-based polymer C. The limiting viscosity $[\eta]C$ of the propylene-based polymer C was calculated by the same method as in Example 1.

The heterophasic propylene polymeric material thus obtained was such that its limiting viscosity ($[\eta]$Total) was 1.25 dL/g and ethylene content was 6.4 mass%. Moreover, a polymerization ratio of the propylene-based polymer A, the propylene-based polymer B, and the propylene-based polymer C was 70/12/18. The propylene-based polymer C was such that its ethylene content was 35 mass%, and the limiting viscosity $[\eta]C$ of the propylene-based polymer C was 2.0 dL/g.

[Comparative Example 1: Preparation of Heterophasic Propylene Polymeric Material]

[Preliminary Polymerization]

Into an SUS-made reactor with a jacket, n-hexane deaerated and dehydrated, a solid catalyst component (a) prepared by the method described in Example 5 of JP 7-216017, cyclohexyl ethyl dimethoxy silane (b), and TEA (c) were supplied in such a way that the quantitative ratio of TEA with respect to the amount of the solid catalyst component was 1.67 mmol/g, the quantitative ratio of cyclohexyl ethyl dimethoxy silane with respect to the amount of the TEA was 0.13 mmol/mmol, so as to prepare a preliminary polymerization component whose degree of preliminary polymerization for propylene was 3.5. The degree of preliminary polymerization is defined as grams of the preliminary polymerized polymer obtained per 1 g of the solid catalyst component.

[Polymerization]

(I) First-Stage Polymerization Step

(I-1) Liquid-Phase Polymerization

Polymerization reaction was carried out by using two SUS-made loop-type liquid-phase polymerization reactors. To begin with, the gas inside the loop-type liquid-phase polymerization reactors was sufficiently purged with propylene. After that, into the first loop-type liquid-phase polymerization reactor, TEA, cyclohexyl ethyl dimethoxy silane (where the ratio of cyclohexyl ethyl dimethoxy silane/TEA = 0.15 mol/mol), and the preliminary polymerization catalyst component were continuously supplied at a rate of 3.7 g/hour, and the polymerization was started by supplying propylene and hydrogen therein with an internal temperature adjusted to 70°C and pressure adjusted to 4.5 MPa by the supply of the propylene and hydrogen, where the propylene and hydrogen were supplied in such a way that the ratio of hydrogen/propylene supplied was 8500 molppm.

From the first loop-type liquid-phase polymerization reactor to the second loop-type liquid-phase polymerization reactor, a slurry containing polypropylene particles and liquid propylene was continuously supplied without inactivation. In the second loop-type liquid-phase polymerization reactor, the polymerization was continuously carried out by supplying propylene and hydrogen therein with an internal temperature adjusted to 70°C and pressure adjusted to 4.5 MPa by the supply of the propylene and hydrogen, where the propylene and hydrogen were supplied in such a way that the ratio of hydrogen/propylene supplied was 8500 molppm.

A limiting viscosity of a propylene homopolymer sampled at the outlet of the second loop-type liquid-phase polymerization reactor was 1.06 dL/g.

Next, the propylene homopolymer in the powder form thus produced in the second loop-type liquid-phase polymerization reactor was taken out and transferred to a fluidized-bed type gas-phase polymerization reactor. The gas-phase polymerization reactor includes a first fluidized-bed type gas-phase polymerization reactor, a second fluidized-bed type gas-phase polymerization reactor, a third fluidized-bed type gas-phase polymerization reactor, which are provided in series, in which the first fluidized-bed type gas-phase polymerization reactor is connected with the second loop-type liquid-phase polymerization reactor and the second fluidized-bed type gas-phase polymerization reactor, and the second fluidized-bed type gas-phase polymerization reactor is connected with the first fluidized-bed type gas-phase polymerization reactor and the third fluidized-bed type gas-phase polymerization reactor.

(1-2) Gas-Phase Polymerization

Propylene homopolymerization was carried out continuously in the first fluidized-bed type gas-phase polymerization reactor and in the second fluidized-bed type gas-phase polymerization reactor. In the first fluidized-bed type gas-phase polymerization reactor, gas-phase polymerization was continuously carried out, in the presence of the propylene homopolymer component in the powder form transferred from the second loop-type liquid-phase polymerization reactor, with a reaction temperature of 80°C, propylene supplied therein continuously in such a way that a reaction pressure of 2.1 MPa was maintained, and hydrogen supplied therein in such a way that hydrogen concentration of 7.5mol% in a gas phase section was maintained, thereby producing a polymer component.

Next, part of the polymer component was continuously transferred to the second fluidized-bed type gas-phase polymerization reactor, and the gas-phase polymerization was continuously carried out therein with a reaction temperature of 80°C, a reaction pressure of 1.7 MPa, and propylene and hydrogen continuously supplied therein in such a way that a hydrogen concentration in a gas phase section of 7.5mol% was maintained, thereby producing a propylene homopolymer component. The propylene homopolymer thus obtained (hereinafter, which may be referred to as "polymer component (I)), had a limiting viscosity of 1.06 dL/g.

Hydrogen/propylene ratios in the first and second fluidized-bed type gas-phase polymerization reactors were both 80000 molppm.

(II) Second-Stage Polymerization Step

Part of the propylene homopolymer component thus obtained was transferred to the fluidized-bed type gas-phase polymerization reactor with a jacket (the third fluidized-bed type gas-phase polymerization reactor), and production of a propylene-ethylene copolymer component (which may be referred to as "polymer component (II)") was started by copolymerization of propylene and ethylene. The polymer component (II) was produced at a reaction temperature of 70°C with propylene and ethylene continuously supplied therein at a ratio of propylene/ethylene = 2/1 (mass ratio) in such a way that a reaction pressure of 1.4 MPa was maintained, and with gas-phase polymerization continuously carried out while adjusting the mixture gas concentration so as to maintain a hydrogen concentration in a gas phase section to 2.1mol%.

Next, powder inside the third fluidized-bed type gas-phase polymerization reactor was continuously transferred to an inactivation tank, and the catalyst component was inactivated with water. After that, the power was dried with nitrogen of 65°C, thereby obtaining a heterophasic propylene polymeric material.

The heterophasic propylene polymeric material thus obtained was such that its limiting viscosity ($[\eta]$Total) was 1.4 dL/g and ethylene content was 7.0 mass%. Moreover, a polymerization ratio between the polymer component (I) and the polymer component (II) was 79/21. This ratio was calculated out from the mass of the propylene block copolymer finally obtained and the amount of the polymer component (I). Ethylene content in the polymer component (II) was 33 mass%, and a limiting viscosity $[\eta]_{II}$ of the polymer component (II) was 2.7 dL/g.

The hydrogen/propylene ratio in the third fluidized-bed type gas-phase polymerization reactor was 39000 molppm.

Results are summarized in Table 1 and Table 2.

[Table 1]

|  |  | Example 1 | Example 2 | Example 3 |
|---|---|---|---|---|
| $[\eta]$ (dL/g) of P portion | Polymer Component (I) | - | - | - |
|  | Propylene-based Polymer A | 0.65 | 0.68 | 0.64 |
|  | Propylene-based Polymer B | 3.2 | 3.0 | 3.6 |
| Total Content of P portion (mass%) |  | 77 | 90 | 80 |
| Content of propylene-based polymer A (mass%) |  | 65 | 72 | 72 |
| Content of propylene-based polymer B (mass%) |  | 12 | 18 | 8 |
| $[\eta]$ (dL/g) of EP portion |  | 2.3 | 1.9 | 2.8 |
| Content of EP portion (mass%) |  | 23 | 10 | 20 |
| Ethylene Content of EP portion (mass%) |  | 41 | 51 | 45 |
| Isotactic Pentad Fraction |  | 0.9843 | 0.9831 | 0.9853 |
| Linear Expansion Coefficient (MD direction: 1/°C) |  | $7.72 \times 10^{-5}$ | $8.59 \times 10^{-5}$ | $7.77 \times 10^{-5}$ |
| Linear Expansion Coefficient (TD direction: 1/°C) |  | $11.4 \times 10^{-5}$ | $12.7 \times 10^{-5}$ | $11.9 \times 10^{-5}$ |
| Linear Expansion Coefficient (MDTD average 1/°C) |  | $9.6 \times 10^{-5}$ | $10.6 \times 10^{-5}$ | $9.84 \times 10^{-5}$ |
| Gel Count (count/100 cm$^2$) |  | 700 | 870 | 820 |

[Table 2]

|  |  | Example 4 | Example 5 | Comparative Example 1 |
|---|---|---|---|---|
| $[\eta]$ (dL/g) of P portion | Polymer Component (I) | - | - | 1.06 |
|  | Propylene-based Polymer A | 0.64 | 0.66 | - |
|  | Propylene-based Polymer B | 3.6 | 3.6 | - |
| Total Content of P portion (mass%) |  | 81 | 82 | 79 |
| Content of propylene-based polymer A (mass%) |  | 69 | 70 | - |
| Content of propylene-based polymer B (mass%) |  | 12 | 12 | - |
| $[\eta]$ (dL/g) of EP portion |  | 2.3 | 2.0 | 2.7 |
| Content of EP portion (mass%) |  | 19 | 18 | 21 |

(continued)

|  | Example 4 | Example 5 | Comparative Example 1 |
|---|---|---|---|
| Ethylene Content of EP portion (mass%) | 47 | 35 | 33 |
| Isotactic Pentad Fraction | 0.9857 | 0.9864 | 0.9849 |
| Linear Expansion Coefficient (MD direction: 1/°C) | $7.89 \times 10^{-5}$ | $8.22 \times 10^{-5}$ | $11.0 \times 10^{-5}$ |
| Linear Expansion Coefficient (TD direction: 1/°C) | $12.4 \times 10^{-5}$ | $12.3 \times 10^{-5}$ | $13.4 \times 10^{-5}$ |
| Linear Expansion Coefficient (MDTD average 1/°C) | $10.2 \times 10^{-5}$ | $10.2 \times 10^{-5}$ | $12.2 \times 10^{-5}$ |
| Gel Count (count/100 cm$^2$) | 1080 | 960 | 1200 |

In the wordings on Tables 1 and 2, the "P portion" and the "EP portion" stand for "propylene-based polymer portion including the propylene-derived monomer unit by 80 mass% or more" and "propylene copolymer portion including ethylene and the propylene-derived monomer unit," respectively.

From Tables 1 and 2, it can be understood that the injection-molded articles according to Examples are low in MDTD average linear expansion coefficient and excellent in dimensional stability. Hence, it was confirmed that a heterophasic propylene polymeric material according to the present embodiment is such that a molded article with an excellent dimensional stability can be produced from the heterophasic propylene polymeric material.

**Claims**

1. A heterophasic propylene polymeric material comprising a propylene-based polymer A, a propylene-based polymer B, and a propylene copolymer C,

   wherein the propylene-based polymer A contains a propylene-derived monomer unit by 80 mass% or more and has a limiting viscosity of 2.0 dL/g or less,
   the propylene-based polymer B contains the propylene-derived monomer unit by 80 mass% or more and has a limiting viscosity of 2.1-4.9 dL/g,
   the propylene copolymer C contains the propylene-derived monomer unit and a monomer unit derived from at least one kind of α-olefin selected from the group consisting of ethylene and α-olefins having 4 to 12 carbon atoms, and has a limiting viscosity of 1.5-4.5 dL/g, the propylene copolymer C containing, by 30-55 mass%, the monomer unit derived from at least one kind of α-olefin selected from the group consisting of ethylene and α-olefins having 4 to 12 carbon atoms, and
   contents of the propylene-based polymer A, the propylene-based polymer B, and the propylene copolymer C are 50-75 mass%, 5-20 mass%, and 5-40 mass%, respectively, where a total mass of the heterophasic propylene polymeric material is 100 mass%.

2. The heterophasic propylene polymeric material according to claim 1, wherein the limiting viscosity of the propylene-based polymer A is 0.3-1.2 dL/g,

   the limiting viscosity of the propylene-based polymer B is 2.5-4.0 dL/g,
   the limiting viscosity of the propylene copolymer C is 2.0-4.0 dL/g,
   the propylene copolymer C contains, by 35-50 mass%, the monomer unit derived from at least one kind of α-olefin selected from the group consisting of ethylene and α-olefins having 4 to 12 carbon atoms, and
   the contents of the propylene-based polymer A, the propylene-based polymer B, and the propylene copolymer C are 60-75 mass%, 7-18 mass%, and 7-33 mass%, respectively, where the total mass of the heterophasic propylene polymeric material is 100 mass%.

3. The heterophasic propylene polymeric material according to claim 1 or 2, wherein the propylene copolymer C contains, by 36-48 mass%, the monomer unit derived from at least one kind of α-olefin selected from the group consisting of ethylene and α-olefins having 4 to 12 carbon atoms.

4. The heterophasic propylene polymeric material according to claim 3, wherein the propylene copolymer C contains, by 38-45 mass%, the monomer unit derived from at least one kind of α-olefin selected from the group consisting of ethylene and α-olefins having 4 to 12 carbon atoms.

5. A method for producing the heterophasic propylene polymeric material according to any one of claims 1 to 4, the method comprising a step 1, a step 2, and a step 3,

the step 1 comprising at least one selected from the group consisting of:

a step 1-1 of polymerizing a monomer or monomers comprising propylene in a liquid phase under a condition that a hydrogen/propylene ratio is 1000 molppm or higher to obtain at least part of the propylene-based polymer A; and
a step 1-2 of polymerizing a monomer or monomers comprising propylene in a gas phase under a condition that a hydrogen/propylene ratio is 50000 molppm or higher to obtain at least part of the propylene-based polymer A,

the step 2 comprising at least one selected from the group consisting of:

a step 2-1 of polymerizing a monomer or monomers comprising propylene in a liquid phase under a condition that a hydrogen/propylene ratio is 40 molppm or higher but less than 1000 molppm to obtain at least part of the propylene-based polymer B; and
a step 2-2 of polymerizing a monomer or monomers comprising propylene in a gas phase under a condition that a hydrogen/propylene ratio is 40 molppm or higher but less than 50000 molppm to obtain at least part of the propylene-based polymer B, and
the step 3 being a step of polymerizing monomers comprising propylene and at least one kind of α-olefin selected from the group consisting of α-olefins having 4 to 12 carbon atoms, under a condition that a hydrogen/propylene ratio is 9000 molppm or higher but 310000 molppm or less to obtain the propylene copolymer C.

6. The method according to claim 5, wherein the hydrogen/propylene ratio in the step 1-1 is 1500 molppm or higher but 100000 molppm or less,

the hydrogen/propylene ratio in the step 1-2 is 65000 molppm or higher but 1500000 molppm or less,
the hydrogen/propylene ratio in the step 2-1 is 50 molppm or higher but 900 molppm or less,
the hydrogen/propylene ratio in the step 2-2 is 100 molppm or higher but 35000 molppm or less, and
the hydrogen/propylene ratio in the step 3 is 12000 molppm or higher but 250000 molppm or less.

7. The method according to claim 5 or 6, wherein the hydrogen/propylene ratio in the step 1-1 is 3000 molppm or higher but 50000 molppm or less,

the hydrogen/propylene ratio in the step 1-2 is 80000 molppm or higher but 1000000 molppm or less,
the hydrogen/propylene ratio in the step 2-1 is 75 molppm or higher but 750 molppm or less,
the hydrogen/propylene ratio in the step 2-2 is 300 molppm or higher but 20000 molppm or less, and
the hydrogen/propylene ratio in the step 3 is 15000 molppm or higher but 200000 molppm or less.

8. A molded article comprising the heterophasic propylene polymeric material according to any one of claims 1 to 4.

<div align="center">

**INTERNATIONAL SEARCH REPORT**

</div>

| | International application No. |
|---|---|
| | PCT/JP2020/047106 |

**A. CLASSIFICATION OF SUBJECT MATTER**
C08F 255/02(2006.01)i; C08L 23/14(2006.01)i
FI: C08L23/14; C08F255/02

According to International Patent Classification (IPC) or to both national classification and IPC

**B. FIELDS SEARCHED**

Minimum documentation searched (classification system followed by classification symbols)
C08L1/00-101/14; C08F255/00-255/10

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 62-195032 A (IDEMITSU PETROCHEMICAL CO., LTD.) 27 August 1987 (1987-08-27) claims, page 1, right column, lines 3-5, page 3, upper left column, line 14 to lower left column, line 12, examples | 1-4, 8<br>5-7 |
| X<br>A | JP 62-195033 A (IDEMITSU PETROCHEMICAL CO., LTD.) 27 August 1987 (1987-08-27) claims, page 1, right column, lines 4-6, page 3, upper right column, line 2 to lower left column, line 19, examples | 1-4, 8<br>5-7 |
| X<br>A | JP 2013-079375 A (SUMITOMO CHEMICAL CO., LTD.) 02 May 2013 (2013-05-02) claims 1-6, paragraphs [0002], [0014]-[0015], [0035], examples | 1-4, 8<br>5-7 |
| A | WO 2018/025863 A1 (SUMITOMO CHEMICAL CO., LTD.) 08 February 2018 (2018-02-08) claims 1-4, examples | 1-8 |

☒ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 February 2021 (24.02.2021) | 09 March 2021 (09.03.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

| | INTERNATIONAL SEARCH REPORT | International application No. |
|---|---|---|
| | | PCT/JP2020/047106 |

C (Continuation).   DOCUMENTS CONSIDERED TO BE RELEVANT

| Category* | Citation of document, with indication, where appropriate, of the relevant passages | Relevant to claim No. |
|---|---|---|
| A | US 2015/0299442 A1 (BOREALIS AG) 22 October 2015 (2015-10-22) claims 19, 24, examples | 1-8 |

Form PCT/ISA/210 (continuation of second sheet) (January 2015)

**INTERNATIONAL SEARCH REPORT**
Information on patent family members

| International application No. |
|---|
| PCT/JP2020/047106 |

| Patent Documents referred in the Report | Publication Date | Patent Family | Publication Date |
|---|---|---|---|
| JP 62-195032 A | 27 Aug. 1987 | US 4734448 A claims 1-3, column 1, lines 3-8, column 4, lines 8-53, examples EP 208330 A1 | |
| JP 62-195033 A | 27 Aug. 1987 | US 4734448 A claims 1-3, column 1, lines 3-8, column 4, lines 8-53, examples EP 208330 A1 | |
| JP 2013-079375 A | 02 May 2013 | US 2013/0079470 A1 claims 1-6, paragraphs [0004], [0021]-[0022], [0042], examples CN 103012961 A | |
| WO 2018/025863 A1 | 08 Feb. 2018 | US 2019/0161605 A1 claims 1-4, examples EP 3495420 A1 CN 109563324 A | |
| US 2015/0299442 A1 | 22 Oct. 2015 | EP 2787034 A1 AU 2014247358 A1 CN 104781336 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009038237 A
- JP 7216017 A